(19)

Europäisches
Patentamt
European
Patent Office
Office européen
des brevets

(11)  **EP 4 430 299 B1**

(12)  **EUROPEAN PATENT SPECIFICATION**

(45) Date of publication and mention
of the grant of the patent:
**19.11.2025  Bulletin 2025/47**

(21) Application number: **22821446.6**

(22) Date of filing: **22.11.2022**

(51) International Patent Classification (IPC):
**F03D 7/02** *(2006.01)*        **F03D 17/00** *(2016.01)*

(52) Cooperative Patent Classification (CPC):
**F03D 17/00; F03D 7/0204;** F05B 2270/321;
F05B 2270/802; Y02E 10/72

(86) International application number:
**PCT/EP2022/082722**

(87) International publication number:
**WO 2023/117252 (29.06.2023 Gazette 2023/26)**

(54) **METHOD AND DEVICE OF CALIBRATING A YAW SYSTEM OF A WIND TURBINE TO REDUCE FATIGUE AND INCREASE POWER**

VERFAHREN UND VORRICHTUNG ZUR KALIBRIERUNG EINES GIERSYSTEMS EINER WINDTURBINE ZUR VERMINDERUNG DER ERMÜDUNG UND ZUR STEIGERUNG DER LEISTUNG

PROCÉDÉ ET DISPOSITIF D'ÉTALONNAGE D'UN SYSTÈME DE LACET D'UNE ÉOLIENNE POUR RÉDUIRE LA FATIGUE ET AUGMENTER LA PUISSANCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2021 EP 21217282**

(43) Date of publication of application:
**18.09.2024  Bulletin 2024/38**

(73) Proprietor: **Siemens Gamesa Renewable Energy A/S**
**7330 Brande (DK)**

(72) Inventors:
• **ESBENSEN, Thomas**
  **7400 Herning (DK)**
• **GUSTAVSEN, Jonas Weiss**
  **7330 Brande (DK)**
• **JOSSO, Maxence**
  **69008 Lyon (FR)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A1- 2 154 362      EP-A1- 3 225 837**
**US-A1- 2020 088 171**

**Description**

<u>Field of invention</u>

The present invention relates to a method and device of calibrating a yaw system of a wind turbine.

It is important for a wind turbine to face the wind in order to maximize power production and minimize loads. The turbines are yawed based on a wind direction measurement, typically derived from a sensor atop a turbine nacelle, wherein the wind sensor can output a continuous signal indicative of the wind direction. If the wind direction measurement is just slightly off, it may result in a yaw misalignment which can cause a significant production loss and increased loading.

To ensure optimal performance of wind turbines, the controller settings (i.e., parameters of the wind turbine controller) need to be optimal. The influence of controller settings has a high impact on power production, loads, and acoustic noise emissions. It may be possible to improve the annual energy production of up to 1 to 2% by proper optimization, reduce structural loads significantly, and reduce noise emission.

Typically, a model of the wind turbine and/or models of the components of the wind turbine are used to derive controller settings. However, due to model limitations or simplifications of the wind turbine and/or the conditions (wind, terrain, environment, etc.) and deviations of the final product (production tolerances, calibration tolerances, etc.), the controller settings may have to be optimized in the field to ensure optimal performance of the wind turbines.

EP 3 225 837 A1 discloses a method for calibrating a wind direction measurement for a wind turbine. The method comprising: measuring plural samples of a relative wind direction representing a difference angle between a real wind direction and an orientation of a measurement equipment, in particular a direction orthogonal to a rotor blade plane, to obtain plural measured relative wind directions; deriving a measured relative wind direction change based on the measured relative wind directions; measuring plural samples of a performance parameter indicating a performance of the wind turbine; deriving a performance change based on the plural samples of the performance parameter; determining a correlation value between the measured relative wind direction change and the performance change; measuring further plural samples of the relative wind direction; and correcting the further measured relative wind directions based on the correlation value, to obtain corrected further measured relative wind directions.

EP2154362A1 discloses a system and a method for calibrating a yaw system of a wind turbine. The method comprising a learning mode step wherein the orientation (yaw angle) of the nacelle is changing in predetermined amount and at predetermined time intervals, a data accumulation step that generated power related data are gathered during the learning mode together with wind speed and wind direction data, analysing step wherein a distribution curve corresponding to the wind direction deviation of the generated power in relation to every wind speed in order to generate a correcting correction value for the wind direction measurement unit, and finally a controlling step wherein the correction value is applied to the wind direction values as measured by the wind direction measurement unit for each measured wind speed values.

<u>Summary of the Invention</u>

It is the object of the present invention to provide a method and a device of accurately calibrating a yaw system of a wind turbine, for example a wind direction sensor or a yaw actuator, to reduce fatigue and to increase power. This object may be achieved by the subject matters according to the independent claims. The present invention is further developed as set forth in the dependent claims.

According to a first aspect of the invention, a method of calibrating a yaw system of a wind turbine is provided. The wind turbine comprises a rotor having a plurality of rotor blades, each blade being configured to be pitched by a pitch angle about a pitch axis of the blade, the rotor being mounted to a nacelle to rotate about a rotation axis with a rotor speed to drive a generator for producing electrical energy, the nacelle being mounted to a tower to rotate about a yaw axis. The method comprises steps of: selecting a first predetermined time span before a yaw operation and a second predetermined time span after the yaw operation; performing a yaw operation in a clockwise yaw direction and a yaw operation in a counter-clockwise yaw direction; recording data of a wind direction and a performance parameter caused by both yaw operations, and averaging the data; determining a first experimental performance parameter in the first predetermined time span and a second experimental performance parameter in the second predetermined time span from the averaged data, preferably from the averaged data of the performance parameter, for each yaw operation in the clockwise yaw direction and the counter-clockwise yaw direction; calculating an experimental performance parameter difference between the first and second experimental performance parameters for each yaw operation in the clockwise yaw direction and the counter-clockwise yaw direction; determining a first wind direction in the first predetermined time span and a second wind direction in the second predetermined time span from the averaged data, preferably from the averaged data of the wind direction, for each yaw operation in the clockwise yaw direction and the counter-clockwise yaw direction; calculating a first theoretical performance parameter in the first predetermined time span based on the determined first wind direction and a second theoretical performance parameter in the second predetermined time span based on the determined second wind direction for each yaw operation in the clockwise yaw direction and the counter-clockwise yaw direction; calculating a theoretical performance parameter difference between the first and second theoretical performance parameters for each yaw operation in the clockwise yaw direction and the counter-clockwise yaw direction; calculating absolute errors between the experimental performance parameter difference and the theoretical performance parameter difference of the yaw operations in the clockwise direction and a counter-clockwise direction, respectively; adding the absolute errors of the yaw operations in the clockwise direction and the counter-clockwise direction to obtain a total error; determining a minimum error of the total error; and determining a yaw misalignment based on the minimum error.

In an embodiment, which is also referred as a hybrid mode which combines the active approach of the first aspect of the present invention with a passive approach, further comprises steps of: performing a yaw event at a yaw event time in the clockwise direction and the counter-clockwise direction; selecting a predetermined further time span directly before the yaw event time for each yaw event in the clockwise direction and the counter-clockwise direction; recording data of a wind direction and a performance parameter in the predetermined further time span before the yaw event time, and averaging the data for each yaw event in the clockwise direction and the counter-clockwise direction; determining a further first experimental performance parameter at the beginning of the further time span and a further second experimental performance parameter at the end of the further time span from the averaged data, preferably from the averaged data of the performance parameter, for each yaw event in the clockwise direction and the counter-clockwise direction; calculating a further experimental performance parameter difference between the further first and further second experimental performance parameters for each yaw event in the clockwise direction and the counter-clockwise direction; determining a further first wind direction at the beginning of the further time span and a further second wind direction at the end of the further time span from the averaged data, preferably from the averaged data of the wind direction, for each yaw event in the clockwise direction and the counter-clockwise direction; calculating a further first theoretical performance parameter at the beginning of the further time span based on the determined further first wind direction and a further second theoretical performance parameter at the end of the further time span based on the determined further second wind direction for each yaw event in the clockwise direction and the counter-clockwise direction; calculating a further theoretical performance parameter difference between the further first and second theoretical performance parameters for each yaw event in the clockwise direction and the counter-clockwise direction; calculating further absolute errors between the further experimental performance parameter difference and the further theoretical performance parameter difference of the yaw events in the clockwise direction and the counter-clockwise direction, respectively; adding the absolute errors of the yaw events in the clockwise direction and the counter-clockwise direction to obtain a total error; determining a further minimum error of the further total error; and determining a further yaw misalignment based on the further minimum error. Preferably, these steps are performed after the steps of the first aspect.

In an embodiment, the yaw operation moves the nacelle in a range between -4° and +4°, preferably in a range between -3° and +3°, more preferred in a range between -2° and +2°.

In an embodiment, averaging the data includes a filtering the data.

In an embodiment, the predetermined time span is in a range between 30 and 240 s, preferably between 60 and 180 s.

In an embodiment, the yaw misalignment is determined in a matrix which includes the error and the yaw misalignment for a range of wind direction offsets and yaw loss exponents.

In an embodiment, the first wind direction is determined by use of a wind sensor, wherein sampled wind direction values are averaged at least in a part of the first predetermined time span; and/or the second wind direction is determined by use of a wind sensor, wherein sampled wind direction values are averaged at least in a part of the second predetermined time span.

In an embodiment, the first theoretical performance parameter $P\gamma+WD2$ is calculated as $P\gamma+WD2 = \cos^\alpha(\gamma + WD2)$; and/or the second theoretical performance parameter $P\gamma+WD3$ is calculated as $P\gamma+WD3 = \cos^\alpha(\gamma + WD3)$; wherein $\alpha$ is a yaw loss exponent and $\gamma$ is the yaw misalignment.

In an embodiment, the error is calculated as a sum of a first absolute error of the yaw operation in the clockwise yaw direction and a second absolute error of the yaw operation in the counter-clockwise yaw direction.

In an embodiment, the performance parameter is selected from a group comprising a power-based parameter of an active electrical or mechanical output power of the wind turbine, and a wind speed-based parameter of an effective wind speed. The power-based parameter and the wind speed-based parameter can be or comprise a rotational speed of the rotor, an active electrical power produced by the generator, a collective pitch reference for collectively pitching all blades, given rotor performance data, operation states, etc.

According to a second aspect of the invention, a device of calibrating a yaw system of a wind turbine is provided. The wind turbine comprises a rotor having a plurality of rotor blades, each blade being configured to be pitched by a pitch angle about a pitch axis of the blade, the rotor being mounted to a nacelle to rotate about a rotation axis with a rotor speed to drive a generator for producing electrical energy, the nacelle being mounted to a tower to rotate about a yaw axis. The device comprises a selecting unit for selecting a first predetermined time span before a yaw operation and a second predetermined time span after the yaw operation; a performing unit for performing a yaw operation in a clockwise yaw direction and a yaw operation in a counter-clockwise yaw direction; a recording unit for recording data of a wind direction and a performance parameter caused by both yaw operations, and averaging the data; a first determining unit for determining a first experimental performance parameter in the first predetermined time span and a second experimental performance parameter in the second predetermined time span from the averaged data for each yaw operation in the clockwise yaw direction and the counter-clockwise yaw direction; a first calculating unit for calculating an experimental performance parameter difference between the first and second experimental performance parameters for each yaw operation in the clockwise yaw direction and the counter-clockwise yaw direction; a second determining unit for determining a first wind direction in the first predetermined time span and a second wind direction in the second predetermined time span from the averaged data for each yaw operation in the clockwise yaw direction and the counter-clockwise yaw direction; a second calculating unit for calculating a first theoretical performance parameter in the first predetermined time span based on the determined first wind direction, and a second theoretical performance parameter in the second predetermined time span based on the determined second wind direction for each yaw operation in the clockwise yaw direction and the counter-clockwise yaw direction; a third calculating unit for calculating a theoretical performance parameter difference between the first and second theoretical performance parameters for each yaw operation in the clockwise yaw direction and the counter-clockwise yaw direction; a fourth calculating unit for calculating absolute errors between the experimental performance parameter difference and the theoretical performance parameter difference of the yaw operations in the clockwise direction and a counter-clockwise direction, respectively; an adding unit configured to add the absolute errors of the yaw operations in the clockwise direction and the counter-clockwise direction to obtain a total error; a third determining unit for determining a minimum error of the total error; and a fourth determining unit for determining a yaw misalignment based on the minimum error.

The utilization of data only before a yaw event eliminates possible errors and dynamics that may exist in a yaw controller, e.g., if a dead band or an offset error exist in a yaw control system, the resulting nacelle position might be incorrect. By eliminating uncertainties in the yaw control system possible errors used in the algorithm are also eliminated.

Advantageously, yaw errors can be reduced, the turbine power production (AEP) can be increased, turbine loads and fatigues can be decreased, and the nacelle can be aligned to the wind direction. The present invention does not require to potentially yaw the turbine out of the wind direction to estimate the offset. There is no additional cost for the customer. Offsets can be estimated using old data. Unpredictable behaviours from wind sensors data obtained after operational yaws can be avoided so that the calibration is more accurate.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1     shows a wind turbine and the different elements thereof according to an embodiment;

Fig. 2     shows a top view of a nacelle of a wind turbine according to an embodiment;

Fig. 3     shows a definition of a yaw direction according to an embodiment;

Fig. 4     shows a top view of a nacelle of a wind turbine and defines different angles according to an embodiment;

Fig. 5     shows recorded data of a wind direction and a nacelle position in a predetermined time span before a yaw event in the clockwise direction according to an embodiment;

Fig. 6     shows recorded data of a filtered yaw error and a power in the predetermined time span before the yaw event in the clockwise direction according to an embodiment;

Fig. 7     shows averaged data of a wind direction and a nacelle position in the predetermined time span before the yaw event in the clockwise direction according to an embodiment;

Fig. 8    shows averaged data of the filtered yaw error and the power in the predetermined time span before the yaw event in the clockwise direction according to an embodiment;

Fig. 9    shows averaged data of a wind direction and a nacelle position in the predetermined time span before the yaw event in the counter-clockwise direction according to an embodiment;

Fig. 10    shows averaged data of the filtered yaw error and the power in the predetermined time span before the yaw event in the counter-clockwise direction according to an embodiment;

Fig. 11    shows power levels read from the averaged power time trajectory according to an embodiment;

Fig. 12    shows averaged data of a wind direction in the predetermined time span before the yaw event in the clockwise direction measured by a primary and a secondary anemometer according to an embodiment;

Fig. 13    shows averaged data of a wind direction in the predetermined time span before the yaw event in the counter-clockwise direction measured by the primary and the secondary anemometer according to an embodiment;

Fig. 14    shows averaged data of a wind direction in the predetermined time span before the yaw event in the counter-clockwise direction measured by a primary and a secondary anemometer according to an embodiment;

Fig. 15    shows theoretical power losses for different yaw loss exponents according to an embodiment;

Fig. 16    shows the theoretical power losses for starting a yaw event in the clockwise direction and the counter-clockwise direction according to an embodiment;

Fig. 17    shows a wind direction signal during a yaw operation according to an embodiment;

Fig. 18    shows offset results during a yaw operation in an adaptation mode according to an embodiment;

Fig. 19    shows signals of a wind direction and a nacelle position during a yaw operation in the clockwise direction according to an embodiment;

Fig. 20    shows signals of a filtered yaw error and power time trajectory during a yaw operation in the clockwise direction according to an embodiment;

Fig. 21    shows signals of a wind direction and a nacelle position during a yaw operation in the counter-clockwise direction according to an embodiment;

Fig. 22    shows signals of a filtered yaw error and power time trajectory during a yaw operation in the counter-clockwise direction according to an embodiment;

Fig. 23    shows power levels read from a power curve during a yaw operation in the clockwise direction according to an embodiment;

Fig. 24    shows power levels read from a power curve during a yaw operation in the counter-clockwise direction according to an embodiment;

Fig. 25    shows signals of a wind direction read from a wind direction curve during a yaw operation in the clockwise direction according to an embodiment; and

Fig. 26    shows signals of a wind direction read from a wind direction curve during a yaw operation in the counter-clockwise direction according to an embodiment.

Detailed Description

The illustrations in the drawings are schematically. It is noted that in different figures, similar or identical elements are provided with the same reference signs.

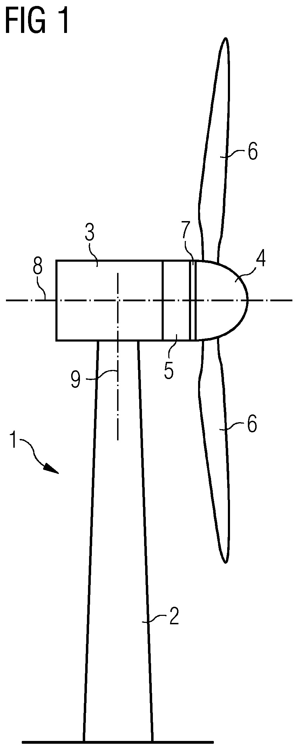

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis 9.

The wind turbine 1 also comprises a rotor 4 with three rotor blades 6 (of which two rotor blades 6 are depicted in Fig. 1). The rotor 4 is mounted rotatable with regard to the nacelle 3 by means of a main bearing 7. The rotor 4 is mounted rotatable about a rotation axis 8 (rotor axis).

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

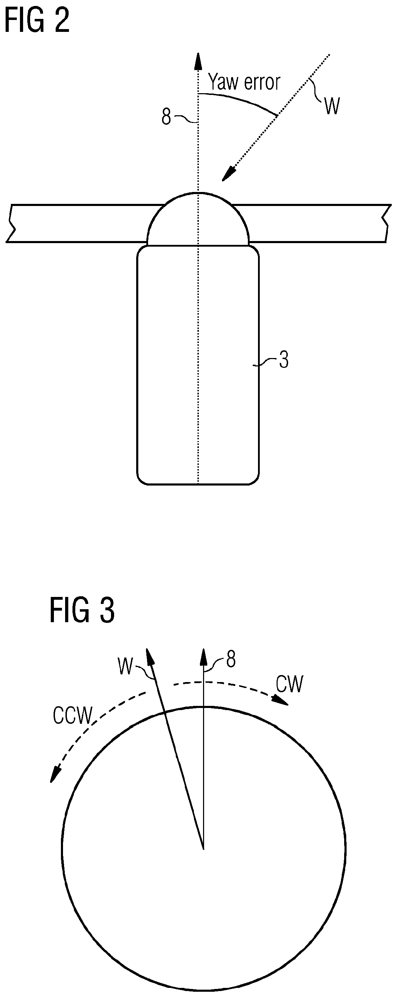

**Fig. 2** shows a top view of a nacelle 3 of a wind turbine 1 according to an embodiment. The wind direction W varies almost continuous and therefore it is desired to adjust the direction of the nacelle 3, which coincides with the rotation axis 8, to ensure that the nacelle 3 is facing the wind. Due to limited yaw capacity, the nacelle 3 can be misaligned to the wind direction; the wind turbine may only be yawing 5 to 10 % of the time. Typically, a certain yaw error is required before the yaw system is activated. A yaw error of approximately 3 to 4° is required for initiating yawing, i.e., a yaw event. This is the dead band of a yaw controller. This means that the wind direction W changes of up to six degrees can occur without the yaw system being activated. Such a change is large enough to affect the performance of the turbine 1. Furthermore, the yaw error evaluated for yaw control can be filtered (averaged/made slower) such that instantaneous yaw errors for a short time exist which are much higher. When the wind direction W overcomes this threshold of the dead band and the nacelle 3 yaws to face the wind, this is defined as an operational yaw event.

**Fig. 3** shows definitions of yaw directions in clockwise and counter-clockwise directions according to an embodiment. The method considers changes in the wind direction leading up to a yaw event in both clockwise (CW) and counter-clockwise (CCW) direction. The definition can be seen in Fig. 2 where the nacelle 3 is illustrated seen from above. Reference sign W designates the relative wind direction and reference sign 8 is the rotation axis which coincides with the actual nacelle orientation.

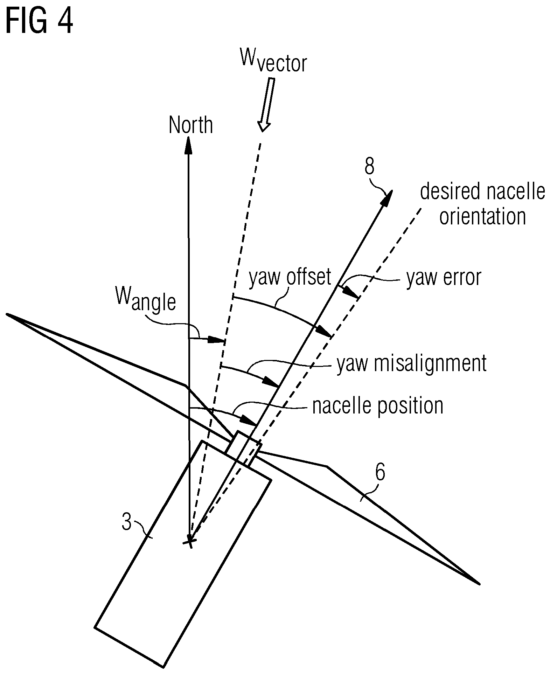

**Fig. 4** shows a top view of a nacelle 3 of a wind turbine 1 and defines different angles according to an embodiment. The aim of the yaw controller is to align the nacelle 3 with a required offset. The offset is generally 0° but in specific cases, the user or wind farm operator may not want the nacelle 3 precisely aligned with the wind direction. The definitions can be seen in Fig. 3 as follows:

The yaw misalignment [deg] is the difference between the nacelle orientation, i.e., the rotation axis 8, and the wind direction Wvector (in the shape of a vector) relative to the cardinal point NORTH. When defined in terms of quantities specified relative to NORTH, the following definitions are valid: The nacelle position [deg] is an angle between NORTH and the rotation axis 8.

The yaw offset is a desired yaw misalignment (i.e., the setpoint/reference signal for the yaw misalignment). The yaw error is a control error in the yaw system, defined by the difference between the current nacelle position and the desired nacelle orientation. The yaw error can also be defined in terms of the previous two definitions

$$\mathtt{yaw\ error\ =\ yaw\ Offset\ -\ yaw\ misalignment\ [deg].}$$

When no yaw offset is applied, the definition becomes:

$$\mathtt{yaw\ error\ =\ -yaw\ misalignment\ [deg].}$$

The method of calibrating a yaw system of the wind turbine 1 comprises a step of performing a yaw event at a yaw event time T0 in a clockwise direction and a counter-clockwise direction as described with respect to Fig. 2. Furthermore, a predetermined time span directly before the yaw event time T0 is selected for each yaw event in the clockwise direction and a counter-clockwise direction. The time span can be in a range between 30 and 240 s, preferably between 60 and 180 s. In the present embodiments, the time span is selected to be 120 s. Findings suggest for example at least 800 yaw events or samples, which are approximately equal to 11 days.

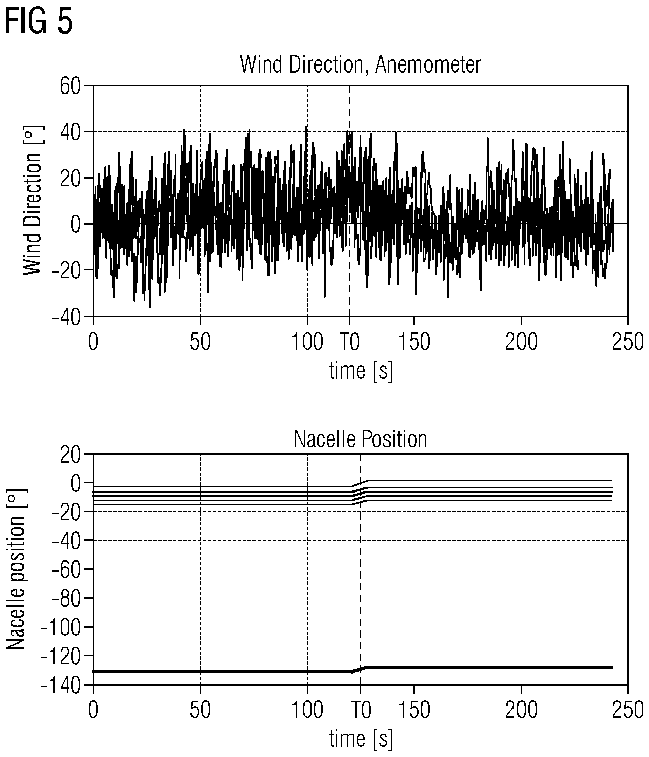

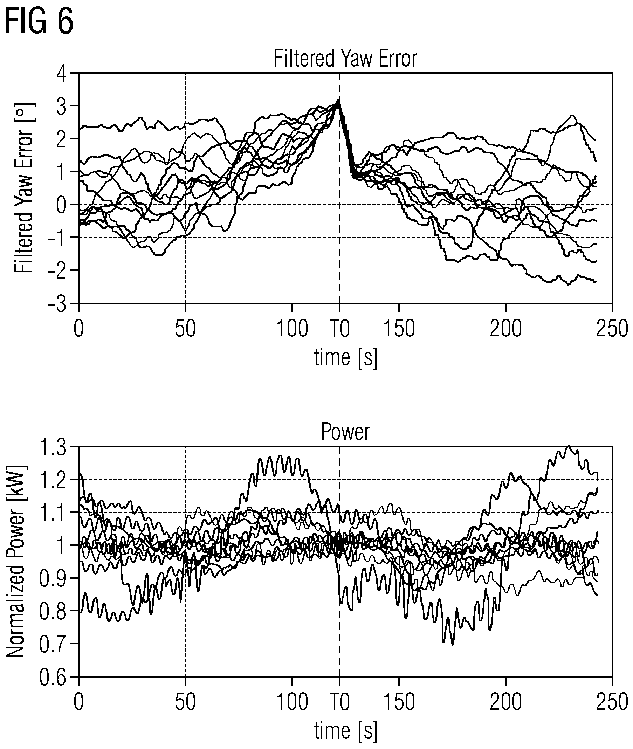

The method of calibrating a yaw system of the wind turbine 1 comprises a step of recording data of a wind direction and a power as an example of the performance parameter in the predetermined time span before the yaw event time T0, as described with reference to Figures 5 and 6.

**Fig. 5** shows recorded data of a wind direction and a nacelle position in the predetermined time span before a yaw event in the clockwise direction according to an embodiment, and **Fig. 6** shows recorded data of a filtered yaw error and a power in the predetermined time span before the yaw event in the clockwise direction according to an embodiment.

In the present invention, it is desired to construct an averaged trajectory of considered signals which will be used to determine the general behavior of a turbine 1 for a given time period. The averaged trajectory represents the general behavior of the performance measures (wind direction and power). For example, in a given time range (e.g., 3 weeks), relevant situations are identified, and time shifted to center yaw events and finally averaged all situations to a single data series which reflects the plurality of events. The steps are elaborated in the following.

In the filtering step, it is desired to isolate the yaw events where the turbine 1 performs a normal operation mode, and to disregard special instances (e.g., startup). Such a filter can consider a normal operation, an underrated power, minimum power above a threshold (e.g., 100 kw), no curtailment, etc.

In addition to that, yaw events can be filtered out where no other yaw events occur within a time window before 120 s.

Also, the data are grouped in CW and CCW directions.

In a resetting step, time stamps for all situations are reset such that when the wind direction drifts off and the yaw controller activates, this can be considered as the start of the yaw event. If the time trajectory is chosen to be 120 s before the yaw event and 120 s after the yaw event, the results can be seen in figures 5 and 6, where 10 timeseries have been put on top of each other for CW (clockwise) yaw events. The power curves have been normalized (for example with reference to a power at the beginning of the time span).

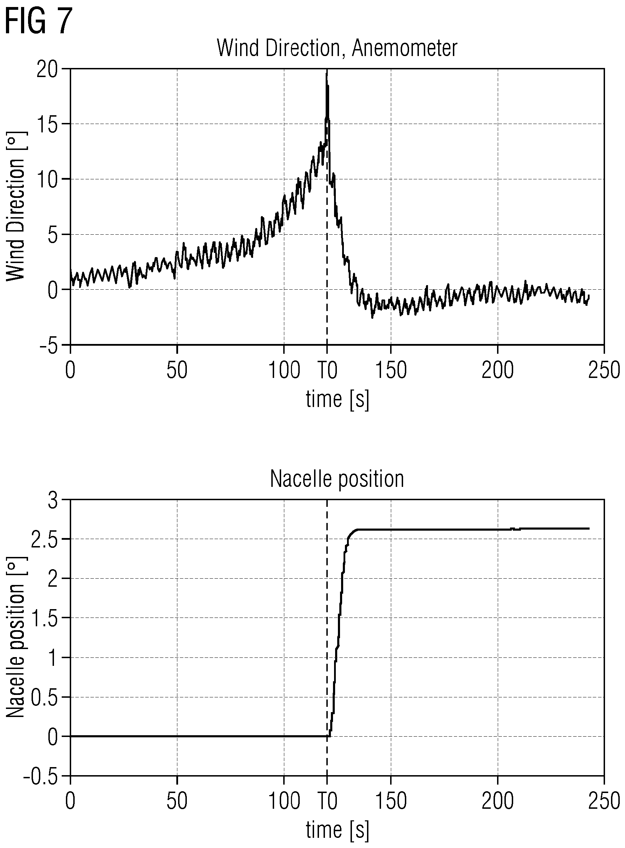

The method of calibrating a yaw system of the wind turbine 1 comprises a step of averaging the data for each yaw event in the clockwise direction and a counter-clockwise direction, as described with reference to Figures 7 to 10. In the step of averaging, when the power signal has been normalized and a bias has been removed for the nacelle position, all signals are averaged for each time step to produce a single timeseries that represents the behavior of the wind turbine 1 for the given time period.

As a result, the averaged trajectories are depicted in Figures 7 to 10. The vertical line symbolizes the yaw event at the yaw event time T0. Averaged trajectories for CW (clockwise) and CCW (counter-clockwise) for the wind turbine 1 can be seen.

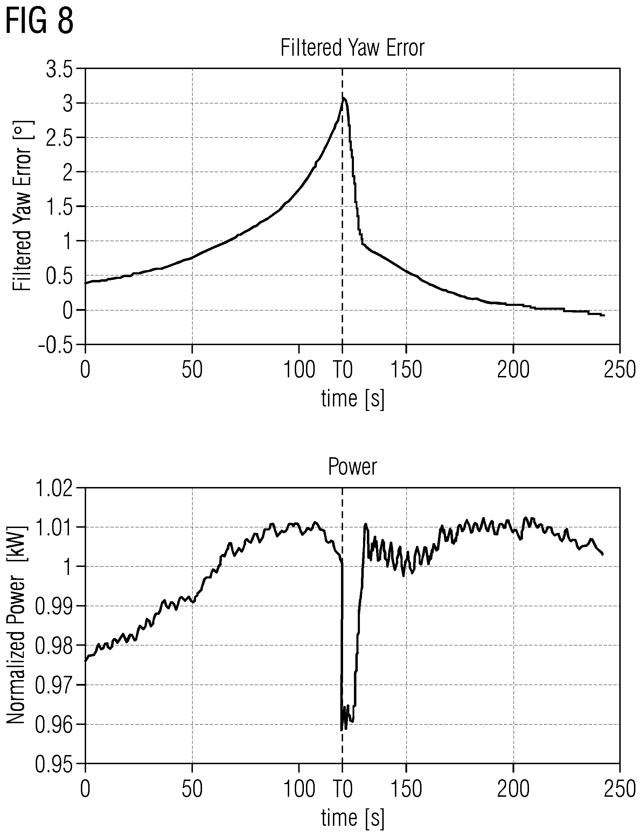

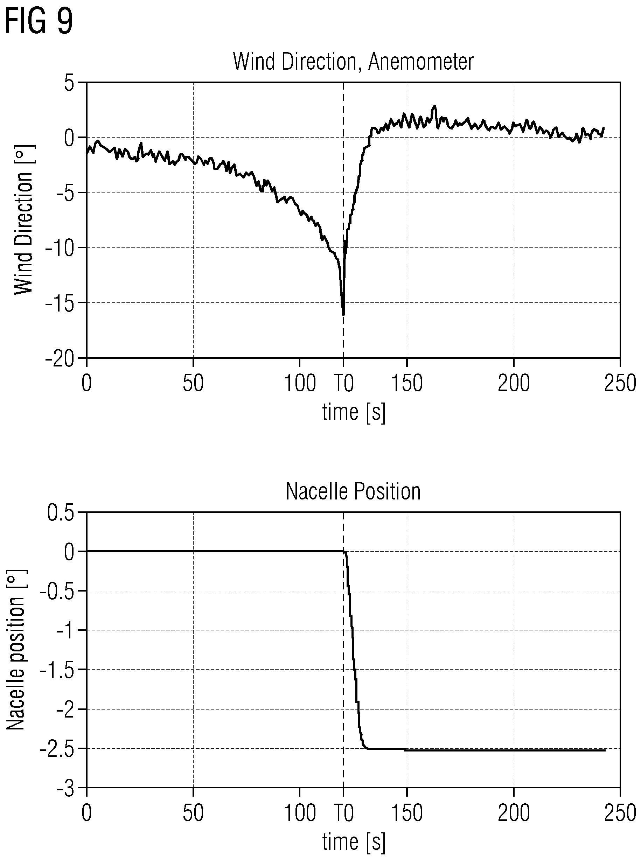

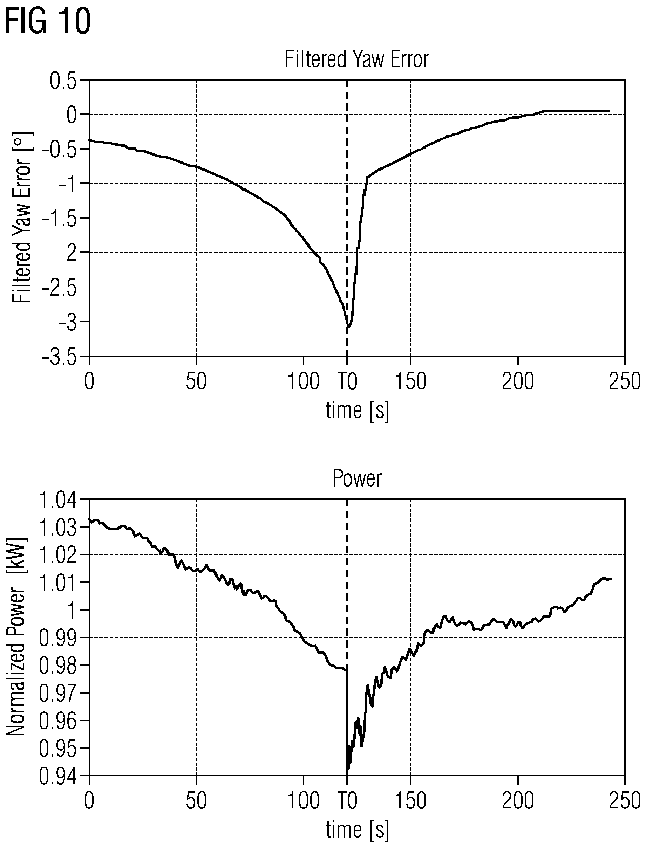

**Fig. 7** shows averaged data of a wind direction and a nacelle position in the predetermined time span before the yaw event in the clockwise direction according to an embodiment, **Fig. 8** shows averaged data of the filtered yaw error and the power in the predetermined time span before the yaw event in the clockwise direction according to an embodiment, **Fig. 9** shows averaged data of a wind direction and a nacelle position in the predetermined time span before the yaw event in the counter-clockwise direction according to an embodiment, and **Fig. 10** shows averaged data of the filtered yaw error and the power in the predetermined time span before the yaw event in the counter-clockwise direction according to an embodiment.

The method of calibrating a yaw system of the wind turbine 1 further comprises a step of determining a first experimental power P1 at the beginning of the time span and a second experimental power P2 at the end of the time span from the averaged data for each yaw event in the clockwise direction and a counter-clockwise direction. For example, the first experimental power P1 at the beginning of the time span is the power at t = 0 s in the lower picture in Fig. 10, and the second experimental power P2 at the end of the time span is the power at t = 120 s in the lower picture in Fig. 10.

The method of calibrating a yaw system of the wind turbine 1 comprises a step of calculating an experimental power difference P2 - P1 between the averaged first and second experimental powers P1, P2 for each yaw event in the clockwise direction and a counter-clockwise direction.

As shown in Figures 7 and 8, a recovery (after the yaw) of power, nacelle position, and filtered yaw error does not match with the wind direction from the anemometer. The figures show the wind direction in normal production surrounded by operational yaw event. It is observed that the yaw event is triggered due to an increasing yaw misalignment of the nacelle up to 15 [deg]. The wind turbine action is a change in the nacelle position of 2.5 [deg]. It is expected that the wind direction and nacelle position should recover equally (change in the nacelle position should be equal to the yaw misalignment.) However, there are unexplainable behaviors of wind direction data after operational yaws. The wind direction and the nacelle position does not recover equally, so that wind data after the yaw can be unreliable. The present invention overcomes this flaw.

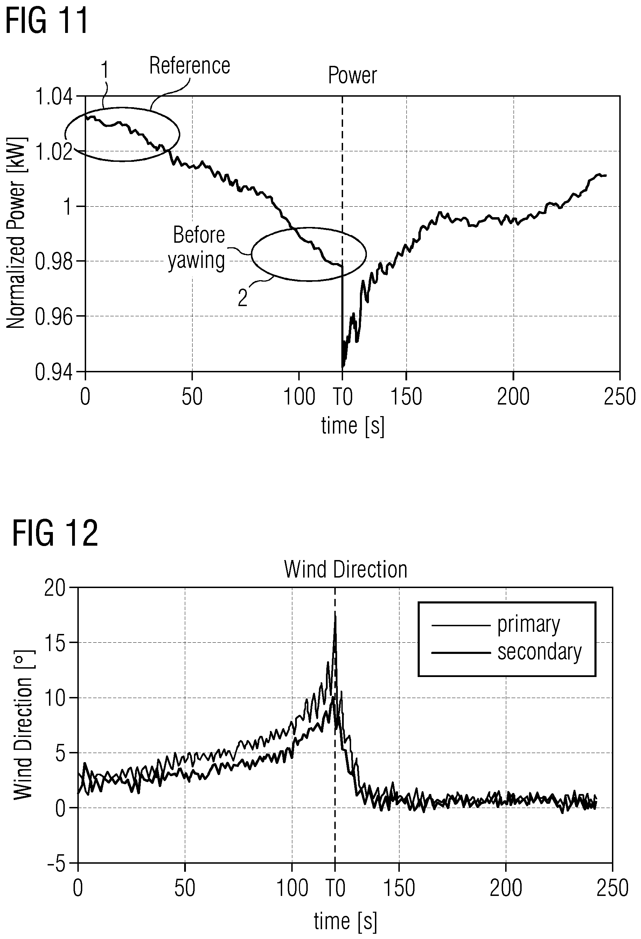

**Fig. 11** shows power levels read from the averaged power time trajectory according to an embodiment, e.g., the averaged power trajectory for a CCW event similar to the bottom picture in Fig. 10, where the yaw event occurs at 120 s. The normalized power output values of P1 and P2 is determined. P1 can be determined by making a mean of the values from 0 s to 40 s:

$$P1_{1:20} = 1.03$$

P2 could be a mean of the values collected 40 s before the yaw event and up to the yaw event:

$$P2_{(120-10:120)} = 0.98$$

The change in power is found and used for further procession:

$$\Delta P_{CCW} = P_2 - P_1 = 0.98 - 1.03 = -0.05$$

The method of calibrating a yaw system of the wind turbine 1 further comprises a step of determining a first wind direction WD1 at the beginning of the time span and a second wind direction WD2 at the end of the time span from the averaged data for each yaw event in the clockwise direction and a counter-clockwise direction, and of calculating a first theoretical power $P\gamma$+WD1 at the beginning of the time span based on the determined first wind direction WD1 and a second theoretical power $P\gamma$+WD2 at the end of the time span, based on the determined second wind direction WD2 for each yaw event in the clockwise direction and a counter-clockwise direction, as described in the embodiment of Figures 12 to 16.

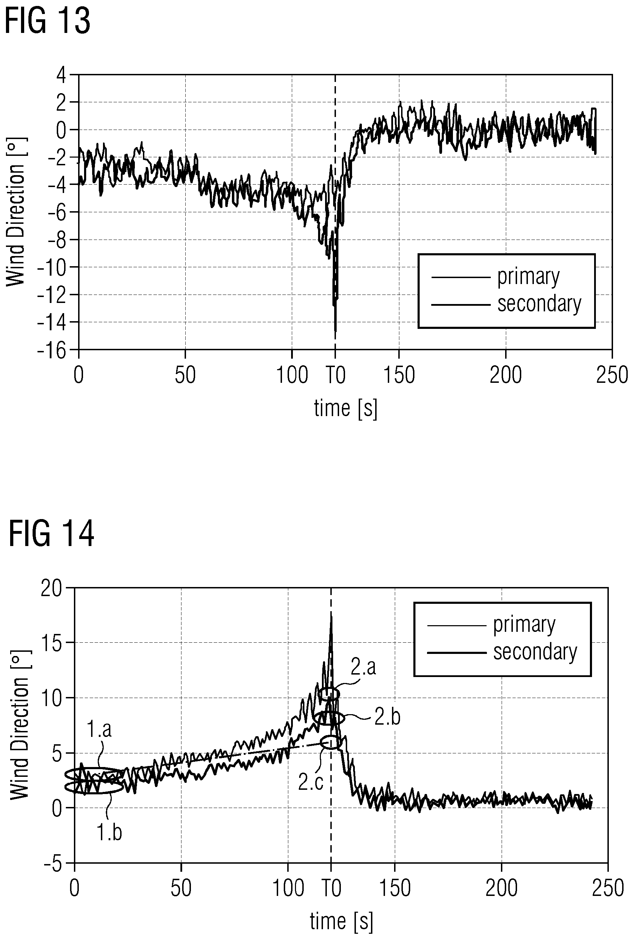

**Fig. 12** shows averaged data of a wind direction in the predetermined time span before the yaw event in the clockwise direction measured by a primary and a secondary anemometer according to an embodiment; **Fig. 13** shows averaged data of a wind direction in the predetermined time span before the yaw event in the counter-clockwise direction measured by the primary and the secondary anemometer according to an embodiment; and **Fig. 14** again shows averaged data of a wind direction in the predetermined time span before the yaw event in the counter-clockwise direction measured by the primary and the secondary anemometer according to an embodiment.

According to the background of the present invention, a passive approach is applied, where a regular yaw event is used (meaning yaw events that occur because the wind is changing), and the nacelle 3 is tracking the wind direction (by the yaw controller). This is contrary to a smart yaw operation, where an offset is actively added on top of the wind direction sensor to increase or decrease the yaw misalignment. The performance data is compared before and after the added offset to determine if the yaw misalignment is either positive or negative (CW or CCW). After a certain number of decisions (e.g. 100), a small offset/step (e.g. 0.3 deg) is then applied to the current offset. An AWDC-method (Automatic-Wind-Direction Calibration, based on data prior to a yaw event) requires a certain amount of collected data in order to compute an offset. Roughly estimates are point towards a least 800 passive yaws.

Advantages of this method are that it is possible to exclude dynamics, and yaw misalignment that may exists in the yaw controller. Furthermore, this method differs from prior knowledge as it does not require data after the yaw event and hereby avoid introducing inaccuracies in sensors (anemometers) and unexplainable behavior in the wind sensor (anemometer) at and after the yaw event.

Next, the behaviors of the wind direction sensors are described. As described before, the exact value of the wind direction is difficult to assess. When considering the behavior before the yaw event, the wind can attain the following development:

- Exponential behavior of the primary sensor,
- Exponential behavior of the secondary sensor,
- Linear behavior of wind direction.

The exponential behavior of the primary and secondary sensors can be seen in Figures 7 to 10. One can chose either of the wind direction behaviors depending on what is considered best for the given situation. In general, results have shown that both the primary and secondary exponential behaviors give good results and that the linear behavior is mostly off.

Fig. 12 particularly shows an example of different exponential behaviors of a primary sensor and a secondary sensor, and Fig. 13 particularly shows an example of a linear behavior on the secondary sensor.

It is to be noted that based on previous investigations, the sensor data just before the yaw event on the primary sensor is believed to be misleading, therefore the data of the primary sensor can be clipped at 10°. The three possible developments for the wind direction can be seen in Fig. 14.

The value of the reference wind direction WD1 before the yaw event can either be:

1.a Average of the first 15 seconds of the primary sensor, if exponential behavior, or linear behavior is chosen.
1.b Average of the first 15 seconds of the secondary sensor if exponential behavior.

The value of the wind direction just before the yaw event WD2 can either be:

2.a Last 10 seconds before the yaw event of the primary sensor, clipped at 10° if exponential behavior is chosen.
2.b Last 10 seconds before the yaw event of the secondary sensor, clipped at 10° if exponential behavior is chosen.
2.c A linear interpolation of the primary sensor data based on the average power of t = [0:15]s and of t = [45:55]s, if linear behavior is chosen.

Assuming an exponential wind direction development and utilizing the primary wind direction sensor, the averaged data are clipped at 10 [deg] for the CW direction in Fig. 14:

$$\mathrm{WD1}_{0:15} = 4°$$

$$\mathrm{WD2}_{(120-10):120} = 10°$$

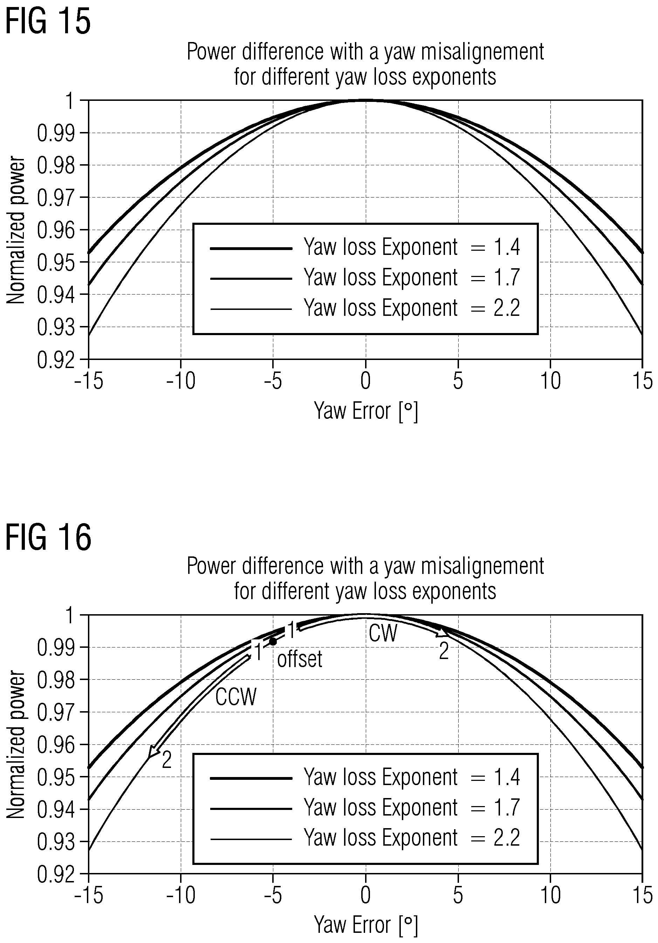

**Fig. 15** shows theoretical power losses for different yaw loss exponents according to an embodiment; and **Fig. 16** shows the theoretical power losses for starting a yaw event in the clockwise direction and the counter-clockwise direction according to an embodiment.

The theoretical power may be expressed in terms of a model e.g., as a relationship indicated by the equation below and seen in Fig. 15:

$$\frac{P_\gamma}{P_0} = \cos^\alpha(\gamma)$$

where $\gamma$ is the yaw misalignment, $\alpha$ is the yaw loss exponent, $\boldsymbol{P_\gamma}$ is the power with a misalignment $\gamma$, and $\boldsymbol{P_0}$ is the power without any yaw misalignment.

The exact value of the yaw loss exponent can be determined in a conventional manner (see Jaime Liew, Albert M. Urbán, and Søren Juhl Andersen, "Analytical model for the power-yaw sensitivity of wind turbines operating in full wake", Wind Energy Science, 31 March 2020). The power losses for different yaw loss exponents can be seen in Fig. 16.

In the following is it assumed that the $P_0 = \cos^\alpha(0°) = 1$ therefore it is assumed that $P_\gamma = \cos^\alpha(\gamma)$. This equation can be for the locations from the averaged trajectories (before the yaw event and just before the yaw event).

$$\mathrm{P\gamma+WD1} = \cos^\alpha(\boldsymbol{\gamma}+\mathrm{WD1}) \text{ and } \mathrm{P\gamma+WD2} = \cos^\alpha(\boldsymbol{\gamma}+\mathrm{WD2})$$

The method of calibrating a yaw system of a wind turbine 1 further comprises a step of calculating a theoretical power difference Pγ+WD1 - Pγ+WD2 between the first and second theoretical powers Pγ+WD1, Pγ+WD2 for each yaw event in the clockwise direction and a counter-clockwise direction with reference to the embodiment of Figures 15 and 16. Combining the equations yields the theoretical power difference:

$$\Delta\mathrm{P} = \mathrm{P\gamma+WD1} - \mathrm{P\gamma+WD2} = \cos^\alpha(\boldsymbol{\gamma}+\mathrm{WD1}) - \cos^\alpha(\boldsymbol{\gamma}+\mathrm{WD2})$$

Fig. 16 shows that for a given offset in the CCW direction, a large power loss is expected whereas in the CW direction the power is supposed to remain relatively stable. If the offset was -10°, the CCW movement would lead to a larger power loss and the CW change would lead to a power gain, as seen on the example averaged power time trajectories Figures 7 to 10.

For example, the theoretical power changes when varying the yaw misalignment $\gamma$ [-20:20] and the yaw loss exponent $\alpha$ [1.4; 1.7; 2.2] in the CW direction:

$$\Delta\mathrm{P_{CW}} = \cos^\alpha(\boldsymbol{\gamma} + 4°) - \cos^\alpha(\boldsymbol{\gamma} + 10°)$$

The same is done for the CCW direction:

$$\Delta\mathrm{P_{CCW}} = \cos^\alpha(\boldsymbol{\gamma} + \mathrm{WD1_{CCW}}) - \cos^\alpha(\boldsymbol{\gamma} + \mathrm{WD1_{CCW}})$$

The method of calibrating a yaw system of a wind turbine 1 further comprises a step of calculating an absolute error (Ecw + Eccw) between the experimental power difference (P2 - P1) and the theoretical power difference (Pγ+WD1 - Pγ+WD2) of the yaw events in the clockwise direction and a counter-clockwise direction, for example like:

$$\text{Ecw} + \text{Eccw} = \text{abs}(\Delta P_{\text{theoryCW}} - \Delta P_{\text{expCW}}) + \text{abs}(\Delta P_{\text{theoryCCW}} - \Delta P_{\text{expCCW}})$$

$$= \text{abs}((\text{P}\gamma+\text{WD1} - \text{P}\gamma+\text{WD2})_{\text{CW}} - (\text{P2} - \text{P1})_{\text{CW}}) +$$

$$\text{abs}((\text{P}\gamma+\text{WD1} - \text{P}\gamma+\text{WD2})_{\text{CCW}} - (\text{P2} - \text{P1})_{\text{CCW}}).$$

The method of calibrating a yaw system of a wind turbine 1 further comprises a step of determining a minimum error, and eventually determining a yaw misalignment based on the minimum error.

For example, the minimum error in the matrix of errors can be determined like:

$$\text{error} = \min(\text{Ecw} + \text{Eccw})$$

This error corresponds to a specific yaw error offset which is the wind direction deviation.

By adjusting the found yaw error offset to the yaw controller, the performance measure should increase.

The description above refers to a passive approach, where a yaw event is triggered when a yaw error exceeds a predetermined angle. The yaw error is estimated based on data obtained before the yaw event.

The description below refers to an active approach according to the present invention, where a yaw operation is actively performed in a clockwise yaw direction and in a counter-clockwise yaw direction, and data of a wind direction and a power as a performance parameter caused by both yaw operations are recorded and averaged, after having selected a first predetermined time span before the active measurement yaw and a second predetermined time span after the active yaw. Here, the yaw error is estimated based on data before and afterwards the active yaw. Contrary to the embodiments described above, the following embodiments utilize an active yaw operation to extract data for further processing. In other words, the algorithm makes the turbine actively yaw fourth and back to determine if any of the yaw operations leads to an increase or decrease in performance measure. In the following embodiments, the wind direction becomes more predictable. Thereby, is it possible to trust and use the wind sensors and the equivalent data. Also, because the signal remains more stable, is it possible to average the power and the wind direction over a longer time span and thereby obtain a more accurate result.

In a suggested new hybrid approach, the passive and the active methods can be combined, i.e., after the active approach performing the active yaw, the passive approach analyzing the yaw event can be performed. Thereby, the movement of the is used to acquire data, and afterwards, the passive analysis is performed on top.

This hybrid method offers a more trustworthy and more stable wind direction measurements and estimates a finite value for the offset instead of only the offset direction (+/-), this method would not need to move far out of the actual wind direction as done in a pure SmartYaw mode (+4°/-4°) because a range of only $\pm2°$ or $\pm3°$ is sufficient. With enough data, the power curves would be constant before and after the yaw operation (like in smart yaw), and the wind direction can precisely be estimated. Once the data is collected, a passive analysis can be performed, and the offset should be precisely estimated.

The hybrid method can be utilized in two different ways:

    1. Recalibrating sensors when the turbine is installed;
    2. Validating/Adjusting an offset found by SmartYaw due to changes (environment, sensor drift off and the like.)

The basic idea of the passive analysis is to compare experimental power changes and wind direction changes with theoretical changes. However, in situations with active yawing, the wind direction changes much less and seems more predictable compared with results which are acquired in a yaw event (following the wind direction drifting), meaning that the theoretical power estimations are more precise.

The inventors carried out tests, where active yawing was active and the wind direction switched from approximately -4° to approximately +4°. It is worth noting that in this situation, active yawing is supposed to have corrected the offset, so the power levels are expected to be identical when the wind direction is at -4° and +4°. The events for a yaw operation in the clockwise direction can be separated into three regions:

    1. The yaw misalignment is around -4°.
    2. When going from negative offset to a positive offset, an offset of +8° is added on the wind direction signal. The passive yaw controller will try to compensate for the error to realign with the wind direction.

3. The yaw misalignment is around +4°.

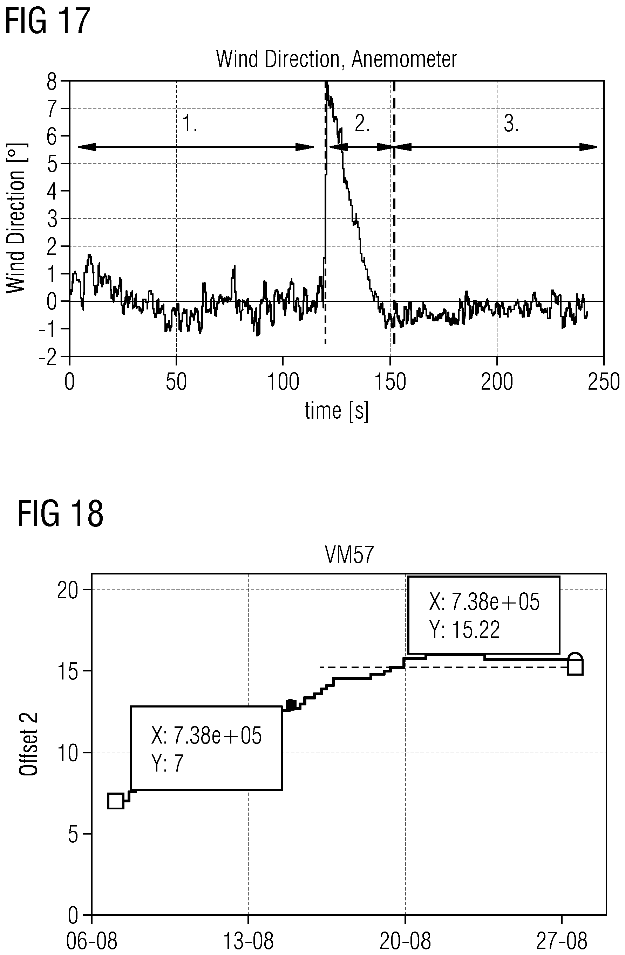

These three steps are reflected in the wind direction signal in **Fig. 17** which shows a wind direction signal during such active yaws according to an embodiment.

In selecting the first predetermined time span before the yaw operation and the second predetermined time span after the yaw operation, it is worth noting that the results can be heavily impacted by the number of yaw operations that go through a filtering step. With less than 500 yaw operations, the averaging of the normalized power curve can lead to misleading results. It is worth mentioning that, when active yawing is in adaptation mode, the offset will change with time. In order to utilize the passive analysis, the chosen data must have an offset which is constant, the moving offset has not yet been coded and implemented as a part of the passive offset estimation.

For example, **Fig. 18** shows offset results during a yaw operation in an adaptation mode according to an embodiment. The offset moves up until the 20th of August but stays in the same region afterwards. The passive analysis will then be tested between 20/08/2020 and 29/08/2020, which are 9 days and correspond to approximately 400 situations.

For the selected time spans, the average trajectory technic is applied to construct the average trajectories.

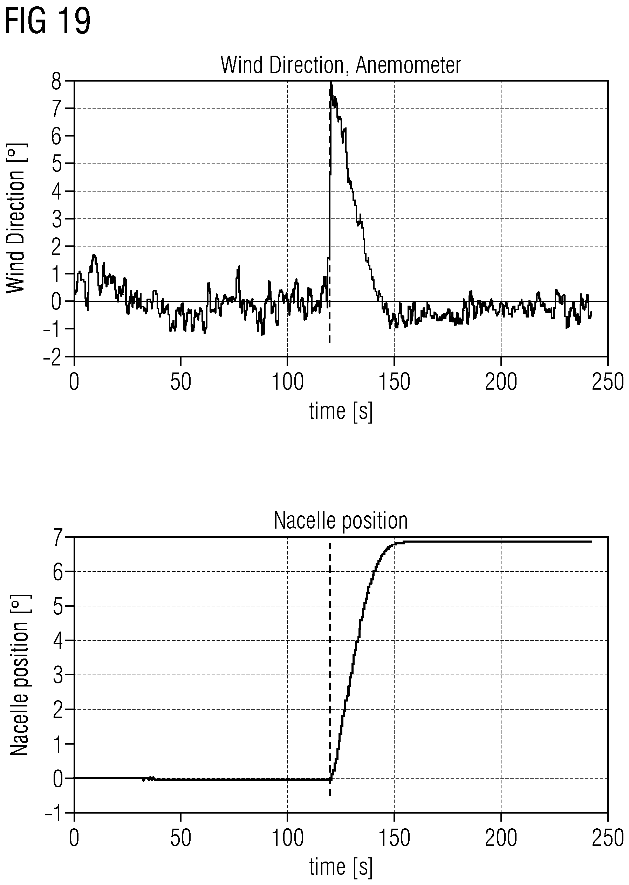

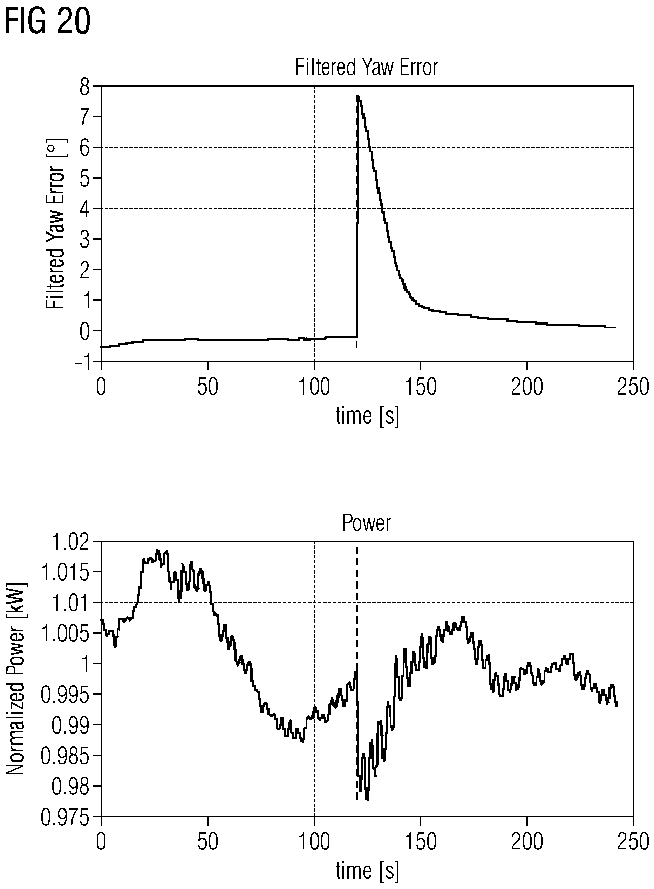

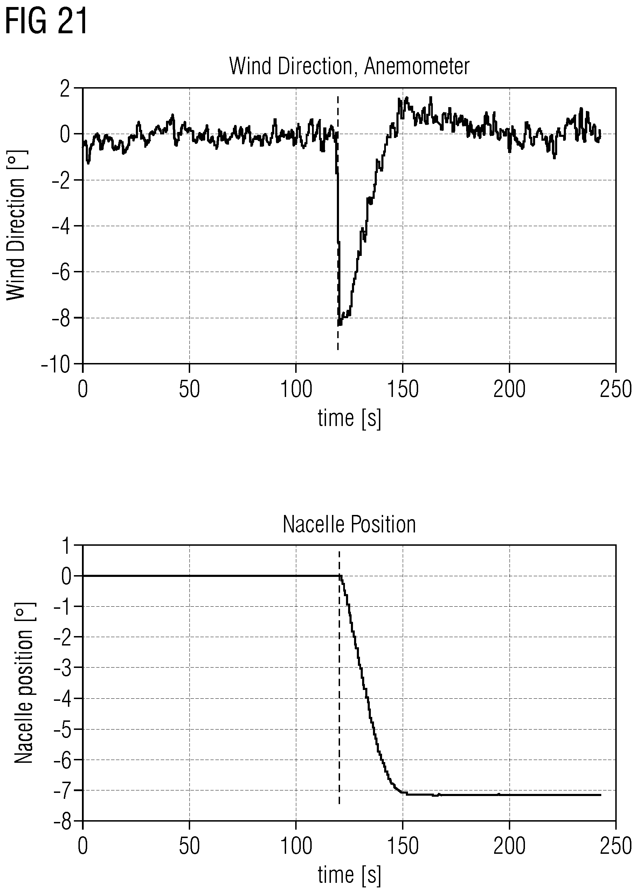

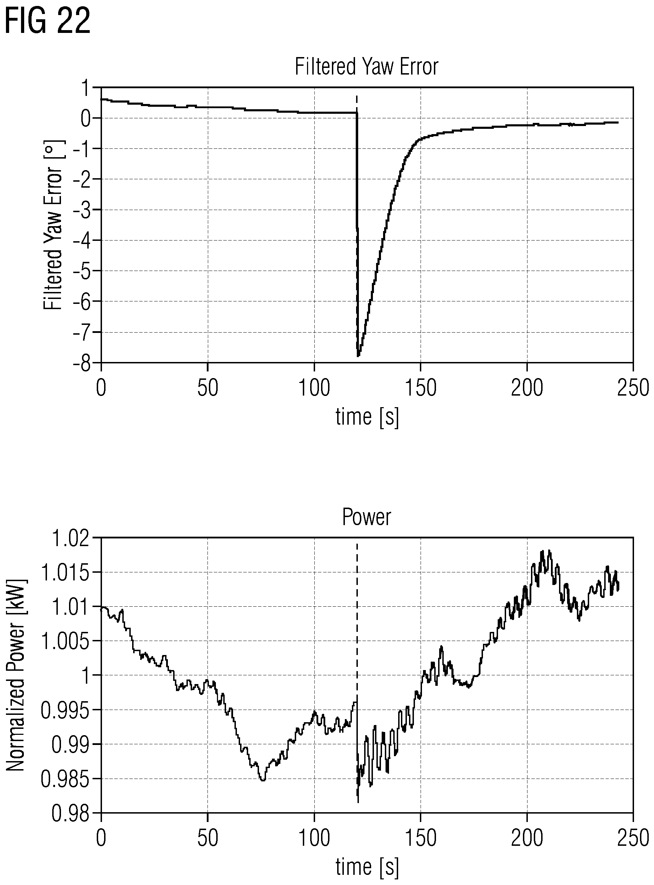

**Fig. 19** shows signals of a wind direction and a nacelle position during an active yaw in the clockwise direction according to an embodiment; **Fig. 20** shows signals of a filtered yaw error and power time trajectory during active yawing in the clockwise direction according to an embodiment; **Fig. 21** shows signals of a wind direction and a nacelle position during active yawing in the counter-clockwise direction according to an embodiment; and **Fig. 22** shows signals of a filtered yaw error and power time trajectory during an active yaw in the counter-clockwise direction according to an embodiment.

A first experimental power P2 in the first predetermined time span and a second experimental power P3 in the second predetermined time span are determined from the recorded data for each yaw operation in the clockwise yaw direction and the counter-clockwise yaw direction.

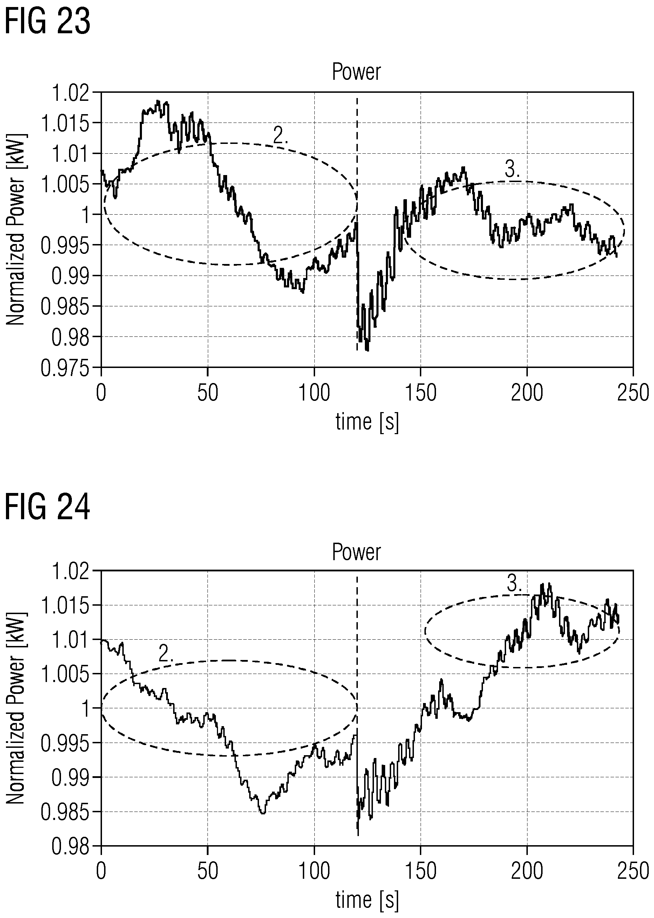

**Fig. 23** shows power levels read from a power curve during an active yaw in the clockwise direction according to an embodiment. In determining the experimental changes in performance measure, normalized power output values of P2 and P3 are determined in the clockwise direction (and the counter-clockwise direction, respectively). For example, P2 can be determined by making a mean of the values from 0 s to 120 s.

$$\mathrm{T0 = time\ for\ active\ yaw\ (120s)}$$

$$P2_{CW(0:120)} = 1.0. \ (0:T0)$$

For example, P3 could be a mean of the values collected 60 s after the yaw operation and until the end. It takes approximately 6 s or more for the power and wind direction to settle after a yaw.

$$P3_{CW(120+60:240)} = 0.995 \ (T0+60:end)$$

The change in power is found and used for further processing:

$$\Delta P_{CW} = P3_{CW} - P2_{CW} = 0.995 - 1.0 = -0.005$$

**Fig. 24** shows power levels read from a power curve during an active yaw in the counter-clockwise direction according to an embodiment. For example, P2 and P3 can be determined as follows:

$$P2_{CCW(0:120)} = 1.00$$

$$P3_{CCW(120+60:240)} = 1.01$$

Then, an experimental power difference P3 - P2 between the first and second experimental powers P2, P3 for each in the clockwise yaw direction and the counter-clockwise yaw direction is calculated. For example, the change in power can be determined as follows:

$$\Delta P_{CCW} = P3_{CCW} - P2_{CCW} = 1.01 - 1.00 = 0.01$$

The same for the wind direction.

Next, a wind direction WD2 in the first predetermined time span and a secondary wind direction WD3 in the second predetermined time span from the recorded data for the averaged trajectory in the clockwise yaw direction and the counter-clockwise yaw direction are determined.

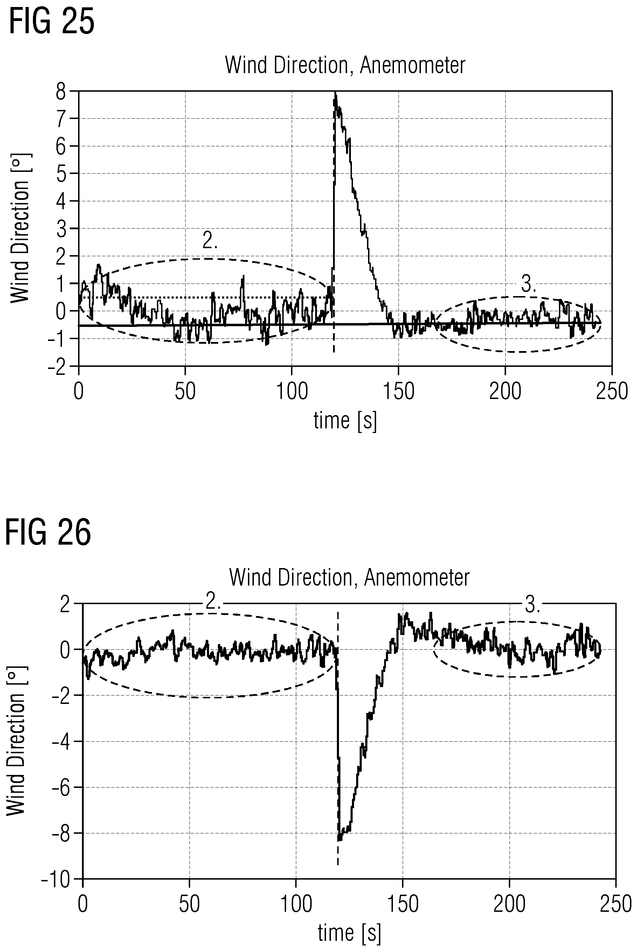

**Fig. 25** shows wind direction during an active yaw in the clockwise direction according to an embodiment; and **Fig. 26** shows wind direction during an active yaw in the counter-clockwise direction according to an embodiment. Here, wind direction values of WD2 and WD3 are determined in the clockwise and counter-clockwise directions.

For example, in the clockwise direction with regards to Fig. 25, WD2 can be determined by making a mean of the values from 0 s to 120 s:

$$WD2_{CW(0:120)} = 0.4°, \quad T0 = \text{active yaw}$$

WD3 could be a mean of the values collected 60 s after the yaw operation and until the end:

$$WD3_{CW(120+60:240)} = -0.6°$$

For example, in the counter-clockwise direction with regards to Fig. 26, WD2 and WD3 can be calculated as follows:

$$WD2_{CCW(0:120)} = -0.1°$$

$$WD3_{CCW(120+60:240)} = -0.1°$$

Thereafter, for a range of offsets $\gamma$ and for a specified yaw loss exponent $\alpha$, a theoretical power $P\gamma+WD2$ in the first predetermined time span based on the determined first wind direction WD2.

A theoretical power $P\gamma+WD3$ in the second predetermined time is calculated based on the determined second wind direction WD3 utilizing the averaged trajectory in both the clockwise yaw direction and the counter-clockwise yaw direction.

For example, the theoretical power changes can be calculated when varying the yaw misalignment $\gamma$ [-20:100:20] and the yaw loss exponent $\alpha$ [1.4; 1.7; 2.2] using the theoretical equations presented before:

$$\Delta P = \cos^\alpha(\gamma + WD3) - \cos^\alpha(\gamma + WD2)$$

Applied in the clockwise direction:

$$\Delta P_{CW} = \cos^\alpha(\gamma + (-0.6°)) - \cos^\alpha(\gamma + 0.4°)$$

Applied in the counter-clockwise direction:

$$\Delta P_{CCW} = \cos^\alpha(\gamma + (-0.1°)) - \cos^\alpha(\gamma + (-0.1°))$$

The resulting values can lead to a matrix containing the error related to various yaw misalignment and various yaw loss exponent, for example with the dimensions [3x100]. 100 represents a number of combinations of a yaw misalignment and yaw loss exponent and corresponding resulting error.

Then, a power error (Ecw + Eccw) between the experimental power difference and the theoretical power difference of the averaged trajectory in the clockwise direction and a counter-clockwise direction is calculated. For example, the absolute error is used as the power can both increase or decrease:

$$E_{CW+CCW} = \text{abs}(\Delta P_{TheoryCW} - \Delta P_{ExpCW}) + \text{abs}(\Delta P_{TheoryCCW} - \Delta P_{ExpCCW})$$

$E_{CW+CCW} = \text{abs}((\cos^\alpha(\gamma - 0.6°) - \cos^\alpha(\gamma + 0.4°)) - (-0.005)) + \text{abs}((\cos^\alpha(\gamma - 0.1°) - \cos^\alpha(\gamma - 0.1°)) - 0.01)$

Then, a minimum index (idx) of the error is determined, i.e., the minimum error in the matrix of performance measure errors is identify the related yaw misalignment and yaw loss exponent.

$$\text{index} = \min(E_{CW+CCW})$$

Thereafter, the yaw misalignment is determined based on the minimum error. yaw misalignment $\gamma$ can be looked-up from the matrix [3x100], by getting the offset and yaw loss exponent corresponding to the minimum error:

$$\gamma = E_{CW+CCW}(\text{idx})$$

By this embodiment, a yaw offset can accurately be derived. By adjusting a yaw error offset to the yaw controller, the yaw misalignment error can be found.

The active yawing can be applied "on the fly" and uses less data than the passive approach. For example, the passive approach usually needs data of more than one day. Even when the offset has been stabilized by active yawing, the number of yaw operations that can be used is still quite small. The switching of the yaw misalignment between -4° and 4° can have an impact on the energy production during the adaptation mode. The passive approach can be applied without imposing any yaw misalignment. The hybrid method could require a smaller yaw misalignment, for example between $\pm 2$ and $\pm 3°$.

The precision of active yawing and the hybrid method is better than the passive approach since the wind direction will be better known. In the hybrid approach, the wind direction is more stable so the averaging can be done on a longer period of time, thus leading to more accurate results. Advantageously, the hybrid approach utilizes the benefits of active yawing (stable wind direction) and performs the passive approach on top to compute an exact offset instead of just a direction. Hence, the method is more accurate, the AEP (Annual Energy Production) can be increased, and fatigues and turbine loads are reduced. Any turbine can quickly be recalibrated (for example within one day) so that a downtime is minimized.

The minimization of yaw errors will result in more correct inputs for park features like wake-adapt and north-calibration.

The performance parameter is not limited to the power but can be any power-based parameter which reflects an active electrical or mechanical output power of the wind turbine 1.

The performance parameter can be a wind speed-based parameter of an effective wind speed, i.e., a wind speed component parallel to the nacelle 3, which can provide a consistent measure of the turbine performance at all wind speeds. This parameter can be estimated from turbine models, the actual power production, the actual rotor speed, and the actual pitch angle. This is possible as all possible combinations of wind speed, rotor speed, and pitch angle will result in a theoretical power output, and thus the effective wind speed can be estimated if the actual operational values are known.

If the estimated effective wind speed is derived from the rotational speed, active electrical power, pitch angle and model data, this measure reflects the underlying, or "true", momentary energy available in the incoming wind and turbine system, and thus has the inherent advantage of being continuous up to and above the maximum rated power of the turbine, which is otherwise saturated at some upper level due to physical limitations in, e.g., the generator and other mechanical components.

With reference to Figures 15 and 16, the relation

$$P_\gamma = \cos^\alpha(\gamma) \ * \ P_0$$

holds where $\gamma$ is the yaw misalignment, $\alpha$ is the yaw loss exponent, $\boldsymbol{P}_\gamma$ is the power with a misalignment $\gamma$, and $\boldsymbol{P}0$ is the power without any yaw misalignment. A similar relation holds for the effective wind speed W, i.e.,

$$W_\gamma = \cos^\alpha(\gamma) \ * \ W_0$$

where $\gamma$ is the yaw misalignment, $\alpha$ is the yaw loss exponent, $W_\gamma$ is the effective wind speed with a misalignment $\gamma$, and $\boldsymbol{W}0$ is the effective wind speed without any yaw misalignment. However, the yaw loss exponent $\alpha$ for the effective wind speed might be different from the yaw loss exponent $\alpha$ of the power.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of calibrating a yaw system of a wind turbine, the wind turbine (1) comprising a rotor (4) having a plurality of rotor blades (6), each blade (6) being configured to be pitched by a pitch angle about a pitch axis of the blade (6), the rotor (4) being mounted to a nacelle (3) to rotate about a rotation axis (8) with a rotor speed to drive a generator (5) for producing electrical energy, the nacelle (3) being mounted to a tower (2) to rotate about a yaw axis (9), the method comprising steps of:

selecting a first predetermined time span before a yaw operation and a second predetermined time span after the yaw operation;

performing a yaw operation in a clockwise yaw direction and a yaw operation in a counter-clockwise yaw direction; recording data of a wind direction and a performance parameter caused by both yaw operations, and averaging the data;

determining a first experimental performance parameter (P2) in the first predetermined time span and a second experimental performance parameter (P3) in the second predetermined time span from the averaged data for each yaw operation in the clockwise yaw direction and the counter-clockwise yaw direction;

calculating an experimental performance parameter difference (P3 - P2) between the first and second experimental performance parameters (P3, P2) for each yaw operation in the clockwise yaw direction and the counter-clockwise yaw direction;

determining a first wind direction (WD2) in the first predetermined time span and a second wind direction (WD3) in the second predetermined time span from the averaged data for each yaw operation in the clockwise yaw direction and the counter-clockwise yaw direction;

calculating a first theoretical performance parameter in the first predetermined time span based on the determined first wind direction (WD2) and a second theoretical performance parameter in the second predetermined time span based on the determined second wind direction (WD3) for each yaw operation in the clockwise yaw direction and the counter-clockwise yaw direction;

calculating a theoretical performance parameter difference between the first and second theoretical performance parameters for each yaw operation in the clockwise yaw direction and the counter-clockwise yaw direction;

calculating absolute errors ($E_{cw + ccw}$) between the experimental performance parameter difference and the theoretical performance parameter difference of the yaw operations in the clockwise direction and a counter-clockwise direction, respectively;

adding the absolute errors (Ecw, Eccw) of the yaw operations in the clockwise direction and the counter-clockwise direction to obtain a total error (Ecw + Eccw);

determining a minimum error (idx) of the total error (Ecw + Eccw); and

determining a yaw misalignment ($\gamma$) based on the minimum error (idx).

2. The method according to the preceding claim, further comprising steps of:

performing a yaw event at a yaw event time (T0) in the clockwise direction and the counter-clockwise direction, respectively;

selecting a predetermined further time span directly before the yaw event time (T0) for each yaw event in the clockwise direction and the counter-clockwise direction;

recording data of a wind direction and a performance parameter in the predetermined further time span before the yaw event time (T0), and averaging the data for each yaw event in the clockwise direction and the counter-clockwise direction;

determining a further first experimental performance parameter (P1) at the beginning of the further time span and a further second experimental performance parameter (P2) at the end of the further time span from the averaged data for each yaw event in the clockwise direction and the counter-clockwise direction;

calculating a further experimental performance parameter difference (P2 - P1) between the further first and further second experimental performance parameters (P1, P2) for each yaw event in the clockwise direction and the counter-clockwise direction;

determining a further first wind direction (WD1) at the beginning of the further time span and a further second wind direction (WD2) at the end of the further time span from the averaged data for each yaw event in the clockwise direction and the counter-clockwise direction;

calculating a further first theoretical performance parameter (P$\gamma$+WD1) at the beginning of the further time span based on the determined further first wind direction (WD1) and a further second theoretical performance parameter (P$\gamma$+WD2) at the end of the further time span based on the determined further second wind direction (WD2) for each yaw event in the clockwise direction and the counter-clockwise direction;

calculating a further theoretical performance parameter difference (P$\gamma$+WD1 - P$\gamma$+WD2) between the further first and second theoretical performance parameters (P$\gamma$+WD1, P$\gamma$+WD2) for each yaw event in the clockwise direction and the counter-clockwise direction;

calculating further absolute errors (Ecw, Eccw) between the further experimental performance parameter difference (P2 - P1) and the further theoretical performance parameter difference (P$\gamma$+WD1 - P$\gamma$+WD2) of the yaw events in the clockwise direction and the counter-clockwise direction, respectively;

adding the further absolute errors (Ecw, Eccw) of the yaw events in the clockwise direction and the counter-clockwise direction to obtain a further total error (Ecw + Eccw);
determining a further minimum (idx) of the further total error; and
determining a further yaw misalignment based on the further minimum error.

3. The method according to claim 2, wherein
the steps of claim 2 are performed after the steps of claim 1.

4. The method according to any one of the preceding claims, wherein
the yaw operation moves the nacelle in a range between -4° and +4°, preferably in a range between -3° and +3°, more preferred in a range between -2° and +2°.

5. The method according to any one of the preceding claims, wherein
averaging the data includes a filtering the data.

6. The method according to any one of the preceding claims, wherein
the predetermined time span is in a range between 30 and 240 s, preferably between 60 and 180 s.

7. The method according to any one of the preceding claims, wherein
the yaw misalignment is determined in a matrix which includes the error and the yaw misalignment for a range of wind direction offsets and yaw loss exponents.

8. The method according to any one of the preceding claims, wherein

the first wind direction (WD2) is determined by use of a wind sensor, wherein sampled wind direction values are averaged at least in a part of the first predetermined time span; and/or
the second wind direction (WD3) is determined by use of a wind sensor, wherein sampled wind direction values are averaged at least in a part of the second predetermined time span.

9. The method according to any one of the preceding claims, wherein

the first theoretical performance parameter $P_{\gamma+WD2}$ is calculated as

$$P\gamma+WD2 = \cos^\alpha(\gamma + WD2);$$

and/or
the second theoretical performance parameter $P_{\gamma+WD3}$ is calculated as

$$P\gamma+WD3 = \cos^\alpha(\gamma + WD3);$$

wherein $\alpha$ is a yaw loss exponent and $\gamma$ is the yaw misalignment.

10. The method according to any one of the preceding claims, wherein
the error (Ecw + Eccw) is calculated as a sum of a first absolute error (Ecw) of the yaw operation in the clockwise yaw direction and a second absolute error (Eccw) of the yaw operation in the counter-clockwise yaw direction.

11. The method according to any one of the preceding claims, wherein
the performance parameter is selected from a group comprising a power-based parameter of an active electrical or mechanical output power of the wind turbine (1), and a wind speed-based parameter of an effective wind speed.

12. A device of calibrating a yaw system of a wind turbine, the wind turbine (1) comprising a rotor (4) having a plurality of rotor blades (6), each blade (6) being configured to be pitched by a pitch angle about a pitch axis of the blade (6), the rotor (4) being mounted to a nacelle (3) to rotate about a rotation axis (8) with a rotor speed to drive a generator (5) for producing electrical energy, the nacelle (3) being mounted to a tower (2) to rotate about a yaw axis (9), the device comprising:

a selecting unit for selecting a first predetermined time span before a yaw operation and a second predetermined time span after the yaw operation;

a performing unit for performing a yaw operation in a clockwise yaw direction and a yaw operation in a counter-clockwise yaw direction;

a recording unit for recording data of a wind direction and a performance parameter caused by both yaw operations, and averaging the data;

a first determining unit for determining a first experimental performance parameter (P2) in the first predetermined time span and a second experimental performance parameter (P3) in the second predetermined time span from the averaged data for each yaw operation in the clockwise yaw direction and the counter-clockwise yaw direction;

a first calculating unit for calculating an experimental performance parameter difference (P3 - P2) between the first and second experimental performance parameters (P3, P2) for each yaw operation in the clockwise yaw direction and the counter-clockwise yaw direction;

a second determining unit for determining a first wind direction (WD2) in the first predetermined time span and a second wind direction (WD3) in the second predetermined time span from the averaged data for each yaw operation in the clockwise yaw direction and the counter-clockwise yaw direction;

a second calculating unit for calculating a first theoretical performance parameter in the first predetermined time span based on the deter-mined first wind direction (WD2) and a second theoretical performance parameter in the second predetermined time span based on the determined second wind direction (WD3) for each yaw operation in the clockwise yaw direction and the counter-clockwise yaw direction;

a third calculating unit for calculating a theoretical performance parameter difference between the first and second theoretical performance parameters for each yaw operation in the clockwise yaw direction and the counter-clockwise yaw direction;

a fourth calculating unit for calculating absolute errors (Ecw, Eccw) between the experimental performance parameter difference and the theoretical performance parameter difference of the yaw operations in the clockwise direction and a counter-clockwise direction, respectively;

an adding unit configured to add the absolute errors (Ecw, Eccw) of the yaw operations in the clockwise direction and the counter-clockwise direction to obtain a total error (Ecw + Eccw);

a third determining unit for determining a minimum error (idx) of the total error (Ecw + Eccw); and

a fourth determining unit for determining a yaw misalignment ($\gamma$) based on the minimum error (idx).

**Patentansprüche**

1. Verfahren zum Kalibrieren eines Giersystems einer Windturbine, wobei die Windturbine (1) einen Rotor (4) mit mehreren Rotorblättern (6) umfasst, wobei jedes Blatt (6) eingerichtet ist, um durch einen Neigungswinkel um eine Neigungsachse des Blatts (6) geneigt zu werden, wobei der Rotor (4) an einer Gondel (3) montiert ist, um sich um eine Drehachse (8) mit einer Rotordrehzahl zu drehen, um einen Generator (5) zum Erzeugen elektrischer Energie anzutreiben, wobei die Gondel (3) auf einem Turm (2) montiert ist, um sich um eine Gierachse (9) zu drehen, das Verfahren die folgenden Schritte umfassend:

Auswählen einer ersten vorbestimmten Zeitspanne vor einem Giervorgang und einer zweiten vorbestimmten Zeitspanne nach dem Giervorgang;

Durchführen eines Giervorgangs im Uhrzeigersinn und eines Giervorgangs gegen den Uhrzeigersinn;

Aufzeichnen von Daten einer Windrichtung und eines Leistungsparameters, die durch beide Giervorgänge verursacht werden, und Mitteln der Daten;

Bestimmen eines ersten experimentellen Leistungsparameters (P2) in der ersten vorbestimmten Zeitspanne und eines zweiten experimentellen Leistungsparameters (P3) in der zweiten vorbestimmten Zeitspanne aus den gemittelten Daten für jeden Giervorgang im Uhrzeigersinn und gegen den Uhrzeigersinn;

Berechnen einer experimentellen Leistungsparameterdifferenz (P3 - P2) zwischen dem ersten und dem zweiten experimentellen Leistungsparameter (P3, P2) für jeden Giervorgang im Uhrzeigersinn und gegen den Uhrzeigersinn;

Bestimmen einer ersten Windrichtung (WD2) in der ersten vorbestimmten Zeitspanne und einer zweiten Windrichtung (WD3) in der zweiten vorbestimmten Zeitspanne aus den gemittelten Daten für jeden Giervorgang im Uhrzeigersinn und gegen den Uhrzeigersinn;

Berechnen eines ersten theoretischen Leistungsparameters in der ersten vorbestimmten Zeitspanne auf Grundlage der bestimmten ersten Windrichtung (WD2) und eines zweiten theoretischen Leistungsparameters in der zweiten vorbestimmten Zeitspanne auf Grundlage der bestimmten zweiten Windrichtung (WD3) für jeden Giervorgang im Uhrzeigersinn und gegen den Uhrzeigersinn;

Berechnen einer theoretischen Leistungsparameterdifferenz zwischen dem ersten und dem zweiten theoretischen Leistungsparameter für jeden Giervorgang im Uhrzeigersinn und gegen den Uhrzeigersinn;

Berechnen absoluter Fehler ($E_{cw}$ + $E_{ccw}$) zwischen der experimentellen Leistungsparameterdifferenz und der theoretischen Leistungsparameterdifferenz der Giervorgänge im Uhrzeigersinn bzw. gegen den Uhrzeigersinn;

Addieren der absoluten Fehler (Ecw, Eccw) der Giervorgänge im Uhrzeigersinn und gegen den Uhrzeigersinn, um einen Gesamtfehler (Ecw + Eccw) zu erlangen;

Bestimmen eines Minimalfehlers (idx) des Gesamtfehlers (Ecw + Eccw); und

Bestimmen einer Gierfehlausrichtung ($\gamma$) auf Grundlage des Minimalfehlers (idx).

2. Verfahren nach dem vorstehenden Anspruch, ferner umfassend folgende Schritte:

Durchführen eines Gierereignisses zu einem Gierereigniszeitpunkt (T0) im Uhrzeigersinn bzw. gegen den Uhrzeigersinn;

Auswählen einer vorbestimmten weiteren Zeitspanne unmittelbar vor dem Gierereigniszeitpunkt (T0) für jedes Gierereignis im Uhrzeigersinn und gegen den Uhrzeigersinn;

Aufzeichnen von Daten einer Windrichtung und eines Leistungsparameters in der vorbestimmten weiteren Zeitspanne vor der Gierereigniszeit (T0) und Mitteln der Daten für jedes Gierereignis im Uhrzeigersinn und gegen den Uhrzeigersinn;

Bestimmen eines weiteren ersten experimentellen Leistungsparameters (P1) zu Beginn der weiteren Zeitspanne und eines weiteren zweiten experimentellen Leistungsparameters (P2) am Ende der weiteren Zeitspanne aus den gemittelten Daten für jedes Gierereignis im Uhrzeigersinn und gegen den Uhrzeigersinn;

Berechnen einer weiteren experimentellen Leistungsparameterdifferenz (P2 - P1) zwischen dem weiteren ersten und dem weiteren zweiten experimentellen Leistungsparameter (P1, P2) für jedes Gierereignis im Uhrzeigersinn und gegen den Uhrzeigersinn;

Bestimmen einer weiteren ersten Windrichtung (WD1) zu Beginn der weiteren Zeitspanne und einer weiteren zweiten Windrichtung (WD2) am Ende der weiteren Zeitspanne aus den gemittelten Daten für jedes Gierereignis im Uhrzeigersinn und gegen den Uhrzeigersinn;

Berechnen eines weiteren ersten theoretischen Leistungsparameters ($P\gamma$ + WD1) zu Beginn der weiteren Zeitspanne auf Grundlage der bestimmten weiteren ersten Windrichtung (WD1) und eines weiteren zweiten theoretischen Leistungsparameters ($P\gamma$ + WD2) am Ende der weiteren Zeitspanne auf Grundlage der bestimmten weiteren zweiten Windrichtung (WD2) für jedes Gierereignis im Uhrzeigersinn und gegen den Uhrzeigersinn;

Berechnen einer weiteren theoretischen Leistungsparameterdifferenz ($P\gamma$ + WD1 - $P\gamma$ + WD2) zwischen dem weiteren ersten und dem zweiten theoretischen Leistungsparameter ($P\gamma$ + WD1, $P\gamma$ + WD2) für jedes Gierereignis im Uhrzeigersinn und gegen den Uhrzeigersinn;

Berechnen weiterer absoluter Fehler (Ecw, Eccw) zwischen der weiteren experimentellen Leistungsparameterdifferenz (P2 - P1) und der weiteren theoretischen Leistungsparameterdifferenz ($P\gamma$ + WD1 - $P\gamma$ + WD2) der Gierereignisse im Uhrzeigersinn bzw. gegen den Uhrzeigersinn;

Addieren der weiteren absoluten Fehler (Ecw, Eccw) der Gierereignisse im Uhrzeigersinn und gegen den Uhrzeigersinn, um einen weiteren Gesamtfehler (Ecw + Eccw) zu erlangen;

Bestimmen eines weiteren Minimums (idx) des weiteren Gesamtfehlers; und

Bestimmen einer weiteren Gierfehlausrichtung auf Grundlage des weiteren Minimalfehlers.

3. Verfahren nach Anspruch 2, wobei
die Schritte nach Anspruch 2 im Anschluss an die Schritte nach Anspruch 1 ausgeführt werden.

4. Verfahren nach einem der vorhergehenden Ansprüche, wobei der Giervorgang die Gondel in einem Bereich zwischen -4° und +4°, vorzugsweise in einem Bereich zwischen -3° und +3°, noch bevorzugter in einem Bereich zwischen -2° und° +2° bewegt.

5. Verfahren nach einem der vorhergehenden Ansprüche, wobei die Mittelung der Daten eine Filterung der Daten beinhaltet.

6. Verfahren nach einem der vorhergehenden Ansprüche, wobei die vorbestimmte Zeitspanne in einem Bereich zwischen 30 und 240 s, vorzugsweise zwischen 60 und 180 s, liegt.

7. Verfahren nach einem der vorhergehenden Ansprüche, wobei die Gierfehlausrichtung in einer Matrix bestimmt wird, die den Fehler und die Gierfehlausrichtung für einen Bereich von Windrichtungsversätzen und Gierverlustexponenten beinhaltet.

8. Verfahren nach einem der vorhergehenden Ansprüche, wobei die erste Windrichtung (WD2) unter Verwendung eines Windsensors bestimmt wird, wobei abgetastete Windrichtungswerte zumindest in einem Teil der ersten vorbestimmten Zeitspanne gemittelt werden; und/oder
die zweite Windrichtung (WD3) unter Verwendung eines Windsensors bestimmt wird, wobei abgetastete Windrichtungswerte zumindest in einem Teil der zweiten vorbestimmten Zeitspanne gemittelt werden.

9. Verfahren nach einem der vorhergehenden Ansprüche, wobei der erste theoretische Leistungsparameter $P\gamma + WD2$ berechnet wird als

$$P\gamma + WD2 = \cos^\alpha (\gamma + WD2);$$

und/oder

der zweite theoretische Leistungsparameter $P\gamma + WD3$ berechnet wird als

$$P\gamma + WD3 = \cos^\alpha (\gamma + WD3),$$

wobei $\alpha$ ein Gierverlust-Exponent ist und $\gamma$ die Gierfehlausrichtung ist.

10. Verfahren nach einem der vorhergehenden Ansprüche, wobei der Fehler (Ecw + Eccw) als Summe eines ersten absoluten Fehlers (Ecw) des Giervorgangs im Uhrzeigersinn und eines zweiten absoluten Fehlers (Eccw) des Giervorgangs gegen den Uhrzeigersinn berechnet wird.

11. Verfahren nach einem der vorhergehenden Ansprüche, wobei der Leistungsparameter aus einer Gruppe ausgewählt ist, umfassend einen leistungsbasierten Parameter einer aktiven elektrischen oder mechanischen Ausgangsleistung der Windturbine (1) und einen auf Windgeschwindigkeit basierenden Parameter einer effektiven Windgeschwindigkeit.

12. Vorrichtung zum Kalibrieren eines Giersystems einer Windturbine, wobei die Windturbine (1) einen Rotor (4) mit mehreren Rotorblättern (6) umfasst, wobei jedes Blatt (6) eingerichtet ist, um durch einen Neigungswinkel um eine Neigungsachse des Blatts (6) geneigt zu werden, wobei der Rotor (4) an einer Gondel (3) montiert ist, um sich um eine Drehachse (8) mit einer Rotordrehzahl zu drehen, um einen Generator (5) zum Erzeugen elektrischer Energie anzutreiben, wobei die Gondel (3) auf einem Turm (2) montiert ist, um sich um eine Gierachse (9) zu drehen, wobei die Vorrichtung Folgendes umfasst:

eine Auswahleinheit zum Auswählen einer ersten vorbestimmten Zeitspanne vor einem Giervorgang und einer zweiten vorbestimmten Zeitspanne nach dem Giervorgang;
eine Durchführeinheit zum Durchführen eines Giervorgangs im Uhrzeigersinn und eines Giervorgangs gegen den Uhrzeigersinn;
eine Aufzeichnungseinheit zum Aufzeichnen von Daten einer Windrichtung und eines Leistungsparameters, die durch beide Giervorgänge verursacht werden, und Mitteln der Daten;
eine erste Bestimmungseinheit zum Bestimmen eines ersten experimentellen Leistungsparameters (P2) in der ersten vorbestimmten Zeitspanne und eines zweiten experimentellen Leistungsparameters (P3) in der zweiten vorbestimmten Zeitspanne aus den gemittelten Daten für jeden Giervorgang im Uhrzeigersinn und gegen den Uhrzeigersinn;
eine erste Berechnungseinheit zum Berechnen einer experimentellen Leistungsparameterdifferenz (P3 - P2) zwischen dem ersten und dem zweiten experimentellen Leistungsparameter (P3, P2) für jeden Giervorgang im Uhrzeigersinn und gegen den Uhrzeigersinn zu berechnen;
eine zweite Bestimmungseinheit zum Bestimmen einer ersten Windrichtung (WD2) in der ersten vorbestimmten Zeitspanne und einer zweiten Windrichtung (WD3) in der zweiten vorbestimmten Zeitspanne aus den gemittelten Daten für jeden Giervorgang im Uhrzeigersinn und gegen den Uhrzeigersinn;
eine zweite Berechnungseinheit zum Berechnen eines ersten theoretischen Leistungsparameters in der ersten vorbestimmten Zeitspanne auf Grundlage der bestimmten ersten Windrichtung (WD2) und eines zweiten theoretischen Leistungsparameters in der zweiten vorbestimmten Zeitspanne auf Grundlage der bestimmten zweiten Windrichtung (WD3) für jeden Giervorgang im Uhrzeigersinn und gegen den Uhrzeigersinn;
eine dritte Berechnungseinheit zum Berechnen einer theoretischen Leistungsparameterdifferenz zwischen dem ersten und dem zweiten theoretischen Leistungsparameter für jeden Giervorgang im Uhrzeigersinn und gegen den Uhrzeigersinn;

eine vierte Berechnungseinheit zum Berechnen absoluter Fehler (Ecw, Eccw) zwischen der experimentellen Leistungsparameterdifferenz und der theoretischen Leistungsparameterdifferenz der Giervorgänge im Uhrzeigersinn bzw. gegen den Uhrzeigersinn;

eine Addiereinheit, die eingerichtet ist, um die absoluten Fehler (Ecw, Eccw) der Giervorgänge im Uhrzeigersinn und gegen den Uhrzeigersinn zu addieren, um einen Gesamtfehler (Ecw + Eccw) zu erlangen;

eine dritte Bestimmungseinheit zum Bestimmen eines Minimalfehlers (idx) des Gesamtfehlers (Ecw + Eccw); und

eine vierte Bestimmungseinheit zum Bestimmen einer Gierfehlausrichtung (γ) auf Grundlage des Minimalfehlers (idx).

## Revendications

**1.** Procédé d'étalonnage d'un système de lacet d'une éolienne, l'éolienne (1) comprenant un rotor (4) ayant une pluralité de pales de rotor (6), chaque pale (6) étant configurée pour être inclinée selon un angle d'inclinaison autour d'un axe d'inclinaison de la pale (6), le rotor (4) étant monté sur une nacelle (3) pour tourner autour d'un axe de rotation (8) à une vitesse de rotor afin d'entraîner un générateur (5) pour produire de l'énergie électrique, la nacelle (3) étant montée sur une tour (2) pour tourner autour d'un axe de lacet (9), le procédé comprenant les étapes de :

sélection d'un premier intervalle de temps prédéterminé avant une opération de lacet et d'un second intervalle de temps prédéterminé après l'opération de lacet ;

exécution d'une opération de lacet dans une direction de lacet dans le sens des aiguilles d'une montre et d'une opération de lacet dans une direction de lacet dans le sens inverse des aiguilles d'une montre ;

enregistrement des données d'une direction du vent et d'un paramètre de performance résultant des deux opérations de lacet, et calcul de la moyenne des données ;

détermination d'un premier paramètre de performance expérimental (P2) dans le premier intervalle de temps prédéterminé et d'un second paramètre de performance expérimental (P3) dans le second intervalle de temps prédéterminé à partir des données moyennes pour chaque opération de lacet dans la direction de lacet dans le sens des aiguilles d'une montre et dans la direction de lacet dans le sens inverse des aiguilles d'une montre ;

calcul d'une différence de paramètre de performance expérimental (P3 - P2) entre les premier et second paramètres de performance expérimentaux (P3, P2) pour chaque opération de lacet dans la direction de lacet dans le sens des aiguilles d'une montre et dans la direction de lacet dans le sens inverse des aiguilles d'une montre ;

détermination d'une première direction du vent (WD2) dans le premier intervalle de temps prédéterminé et d'une seconde direction du vent (WD3) dans le second intervalle de temps prédéterminé à partir des données moyennes pour chaque opération de lacet dans la direction de lacet dans le sens des aiguilles d'une montre et dans la direction de lacet dans le sens inverse des aiguilles d'une montre ;

calcul d'un premier paramètre de performance théorique dans le premier intervalle de temps prédéterminé sur la base de la première direction du vent déterminée (WD2) et d'un second paramètre de performance théorique dans le second intervalle de temps prédéterminé sur la base de la seconde direction du vent déterminée (WD3) pour chaque opération de lacet dans la direction de lacet dans le sens des aiguilles d'une montre et dans la direction de lacet dans le sens inverse des aiguilles d'une montre ;

calcul d'une différence de paramètre de performance théorique entre les premier et second paramètres de performance théoriques pour chaque opération de lacet dans la direction de lacet dans le sens des aiguilles d'une montre et dans la direction de lacet dans le sens inverse des aiguilles d'une montre ;

calcul des erreurs absolues ($E_{cw + ccw}$) entre la différence de paramètre de performance expérimental et la différence de paramètre de performance théorique des opérations de lacet dans le sens des aiguilles d'une montre et dans le sens inverse des aiguilles d'une montre, respectivement ;

addition des erreurs absolues (Ecw, Eccw) des opérations de lacet dans le sens des aiguilles d'une montre et dans le sens inverse des aiguilles d'une montre pour obtenir une erreur totale (Ecw + Eccw) ;

détermination d'une erreur minimale (idx) de l'erreur totale (Ecw + Eccw) ; et

détermination d'un désalignement de lacet (γ) sur la base de l'erreur minimale (idx).

**2.** Procédé selon la revendication précédente, comprenant en outre les étapes de :

exécution d'un événement de lacet à un moment d'événement de lacet (T0) dans le sens des aiguilles d'une montre et dans le sens inverse des aiguilles d'une montre, respectivement ;

sélection d'un intervalle de temps supplémentaire prédéterminé directement avant le moment d'événement de lacet (T0) pour chaque événement de lacet dans le sens des aiguilles d'une montre et dans le sens inverse des aiguilles d'une montre ;

enregistrement des données de la direction du vent et d'un paramètre de performance dans l'intervalle de temps supplémentaire prédéterminé avant le moment d'événement de lacet (T0), et calcul de la moyenne des données pour chaque événement de lacet dans le sens des aiguilles d'une montre et dans le sens inverse des aiguilles d'une montre ;

détermination d'un premier paramètre de performance expérimental supplémentaire (P1) au début de l'intervalle de temps supplémentaire et d'un second paramètre de performance expérimental supplémentaire (P2) à la fin de l'intervalle de temps supplémentaire à partir des données moyennes pour chaque événement de lacet dans le sens des aiguilles d'une montre et dans le sens inverse des aiguilles d'une montre ;

calcul d'une différence de paramètre de performance expérimental supplémentaire (P2 - P1) entre les premier et second paramètres de performance expérimentaux supplémentaires (P1, P2) pour chaque événement de lacet dans le sens des aiguilles d'une montre et dans le sens inverse des aiguilles d'une montre ;

détermination d'une première direction du vent supplémentaire (WD1) au début de l'intervalle de temps supplémentaire et d'une seconde direction du vent supplémentaire (WD2) à la fin de l'intervalle de temps supplémentaire à partir des données moyennes pour chaque événement de lacet dans le sens des aiguilles d'une montre et dans le sens inverse des aiguilles d'une montre ;

calcul d'un premier paramètre de performance théorique supplémentaire (P$\gamma$+WD1) au début de l'intervalle de temps supplémentaire sur la base de la première direction du vent supplémentaire déterminée (WD1) et d'un second paramètre de performance théorique supplémentaire (Py+WD2) à la fin de l'intervalle de temps supplémentaire sur la base de la seconde direction du vent supplémentaire déterminée (WD2) pour chaque événement de lacet dans le sens des aiguilles d'une montre et dans le sens inverse des aiguilles d'une montre ;

calcul d'une différence de paramètre de performance théorique supplémentaire (P$\gamma$+WD1 - P$\gamma$+WD2) entre les premier et second paramètres de performance théoriques supplémentaires (P$\gamma$+WD1, P$\gamma$+WD2) pour chaque événement de lacet dans le sens des aiguilles d'une montre et dans le sens inverse des aiguilles d'une montre ;

calcul d'erreurs absolues supplémentaires (Ecw, Eccw) entre la différence de paramètre de performance expérimental supplémentaire (P2 - P1) et la différence de paramètre de performance théorique supplémentaire (P$\gamma$+WD1 - P$\gamma$+WD2) des événements de lacet dans le sens des aiguilles d'une montre et dans le sens inverse des aiguilles d'une montre, respectivement ;

addition des erreurs absolues supplémentaires (Ecw, Eccw) des événements de lacet dans le sens des aiguilles d'une montre et dans le sens inverse des aiguilles d'une montre pour obtenir une erreur totale supplémentaire (Ecw + Eccw) ;

détermination d'une erreur minimale supplémentaire (idx) de l'erreur totale supplémentaire ; et

détermination d'un désalignement de lacet supplémentaire sur la base de l'erreur minimale supplémentaire.

3. Procédé selon la revendication 2, dans lequel les étapes de la revendication 2 sont exécutées après les étapes de la revendication 1.

4. Procédé selon l'une quelconque des revendications précédentes, dans lequel
l'opération de lacet déplace la nacelle dans une plage comprise entre -4° et +4°, de préférence dans une plage comprise entre -3° et +3°, et de manière plus préférée dans une plage comprise entre -2° et +2°.

5. Procédé selon l'une quelconque des revendications précédentes, dans lequel
le calcul de la moyenne des données comprend un filtrage des données.

6. Procédé selon l'une quelconque des revendications précédentes, dans lequel
l'intervalle de temps prédéterminé se trouve dans une plage comprise entre 30 et 240 s, de préférence entre 60 et 180 s.

7. Procédé selon l'une quelconque des revendications précédentes, dans lequel
le désalignement de lacet est déterminé dans une matrice qui comprend l'erreur et le désalignement de lacet pour une plage de décalages de direction du vent et d'exposants de perte de lacet.

8. Procédé selon l'une quelconque des revendications précédentes, dans lequel
la première direction du vent (WD2) est déterminée par utilisation d'un capteur de vent, dans lequel les valeurs échantillonnées de la direction du vent sont moyennées au moins dans une partie du premier intervalle de temps prédéterminé ; et/ou

la seconde direction du vent (WD3) est déterminée par utilisation d'un capteur de vent, dans lequel les valeurs échantillonnées de la direction du vent sont moyennées au moins dans une partie du second intervalle de temps prédéterminé.

9. Procédé selon l'une quelconque des revendications précédentes, dans lequel

le premier paramètre de performance théorique Pγ+WD2 est calculé selon

$$Pγ+WD2 = \cos^{α}(γ + WD2) \ ;$$

et/ou
le second paramètre de performance théorique Pγ+WD3 est calculé selon

$$Pγ+WD3 = \cos^{α}(γ + WD3) \ ;$$

dans lequel $α$ est un exposant de perte de lacet et y est le désalignement de lacet.

10. Procédé selon l'une quelconque des revendications précédentes, dans lequel l'erreur (Ecw + Eccw) est calculée comme la somme d'une première erreur absolue (Ecw) de l'opération de lacet dans la direction de lacet dans le sens des aiguilles d'une montre et d'une seconde erreur absolue (Eccw) de l'opération de lacet dans la direction de lacet dans le sens inverse des aiguilles d'une montre.

11. Procédé selon l'une quelconque des revendications précédentes, dans lequel le paramètre de performance est sélectionné parmi un groupe comprenant un paramètre basé sur la puissance d'une puissance de sortie électrique ou mécanique active de l'éolienne (1) et un paramètre basé sur la vitesse du vent d'une vitesse effective du vent.

12. Dispositif d'étalonnage d'un système de lacet d'une éolienne, l'éolienne (1) comprenant un rotor (4) ayant une pluralité de pales de rotor (6), chaque pale (6) étant configurée pour être inclinée selon un angle d'inclinaison autour d'un axe d'inclinaison de la pale (6), le rotor (4) étant monté sur une nacelle (3) pour tourner autour d'un axe de rotation (8) à une vitesse de rotor afin d'entraîner un générateur (5) pour produire de l'énergie électrique, la nacelle (3) étant montée sur une tour (2) pour tourner autour d'un axe de lacet (9), le dispositif comprenant :

une unité de sélection pour sélectionner un premier intervalle de temps prédéterminé avant une opération de lacet et un second intervalle de temps prédéterminé après l'opération de lacet ;
une unité d'exécution pour exécuter une opération de lacet dans une direction de lacet dans le sens des aiguilles d'une montre et une opération de lacet dans une direction de lacet dans le sens inverse des aiguilles d'une montre ;
une unité d'enregistrement pour enregistrer les données d'une direction du vent et d'un paramètre de performance résultant des deux opérations de lacet, et pour calculer la moyenne des données ;
une première unité de détermination pour déterminer un premier paramètre de performance expérimental (P2) dans le premier intervalle de temps prédéterminé et un second paramètre de performance expérimental (P3) dans le second intervalle de temps prédéterminé à partir des données moyennes pour chaque opération de lacet dans la direction de lacet dans le sens des aiguilles d'une montre et dans la direction de lacet dans le sens inverse des aiguilles d'une montre ;
une première unité de calcul pour calculer une différence de paramètre de performance expérimental (P3 - P2) entre les premier et second paramètres de performance expérimentaux (P3, P2) pour chaque opération de lacet dans la direction de lacet dans le sens des aiguilles d'une montre et dans la direction de lacet dans le sens inverse des aiguilles d'une montre ;
une deuxième unité de détermination pour déterminer une première direction du vent (WD2) dans le premier intervalle de temps prédéterminé et une seconde direction du vent (WD3) dans le second intervalle de temps prédéterminé à partir des données moyennes pour chaque opération de lacet dans la direction de lacet dans le sens des aiguilles d'une montre et dans la direction de lacet dans le sens inverse des aiguilles d'une montre ;
une deuxième unité de calcul pour calculer un premier paramètre de performance théorique dans le premier intervalle de temps prédéterminé sur la base de la première direction du vent déterminée (WD2) et un second paramètre de performance théorique dans le second intervalle de temps prédéterminé sur la base de la seconde direction du vent déterminée (WD3) pour chaque opération de lacet dans la direction de lacet dans le sens des aiguilles d'une montre et dans la direction de lacet dans le sens inverse des aiguilles d'une montre ;

une troisième unité de calcul pour calculer une différence de paramètre de performance théorique entre les premier et second paramètres de performance théoriques pour chaque opération de lacet dans la direction de lacet dans le sens des aiguilles d'une montre et dans la direction de lacet dans le sens inverse des aiguilles d'une montre ;

une quatrième unité de calcul pour calculer les erreurs absolues (Ecw, Eccw) entre la différence de paramètre de performance expérimental et la différence de paramètre de performance théorique des opérations de lacet dans le sens des aiguilles d'une montre et dans le sens inverse des aiguilles d'une montre, respectivement ;

une unité d'addition configurée pour additionner les erreurs absolues (Ecw, Eccw) des opérations de lacet dans le sens des aiguilles d'une montre et dans le sens inverse des aiguilles d'une montre afin d'obtenir une erreur totale (Ecw + Eccw) ;

une troisième unité de détermination pour déterminer une erreur minimale (idx) de l'erreur totale (Ecw + Eccw) ; et

une quatrième unité de détermination pour déterminer un désalignement de lacet (γ) sur la base de l'erreur minimale (idx).

FIG 1

## FIG 2

Yaw error

W

8

3

## FIG 3

W

8

CW

CCW

FIG 4

FIG 5

Wind Direction, Anemometer

Nacelle Position

# FIG 6

Filtered Yaw Error

Power

## FIG 7

### Wind Direction, Anemometer

### Nacelle position

FIG 8

Filtered Yaw Error

Power

# FIG 9

Wind Direction, Anemometer

Nacelle Position

# FIG 10

## Filtered Yaw Error

## Power

# FIG 11

# FIG 12

## FIG 13

## FIG 14

## FIG 15

Power difference with a yaw misalignement
for different yaw loss exponents

## FIG 16

Power difference with a yaw misalignement
for different yaw loss exponents

FIG 17

Wind Direction, Anemometer

FIG 18

VM57

FIG 19

Wind Direction, Anemometer

Nacelle position

FIG 20

Filtered Yaw Error

Power

# FIG 21

Wind Direction, Anemometer

Nacelle Position

# FIG 22

Filtered Yaw Error

Power

FIG 23

FIG 24

FIG 25

**Wind Direction, Anemometer**

FIG 26

**Wind Direction, Anemometer**

**REFERENCES CITED IN THE DESCRIPTION**

**Patent documents cited in the description**

- EP 3225837 A1
- EP 2154362 A1

**Non-patent literature cited in the description**

- **JAIME LIEW** ; **ALBERT M. URBÁN** ; **SØREN JUHL ANDERSEN**. Analytical model for the power-yaw sensitivity of wind turbines operating in full wake. *Wind Energy Science*, 31 March 2020